# DEMANDE DE BREVET EUROPEEN

(11) **EP 4 826 563 A1**
(43) Date de publication de la demande: **21.10.2026**
(21) Numéro de dépôt: 26172529.5
(22) Date de dépôt: 15.04.2026
(51) Int. Cl.: G06F 16/36

(54) **PROCÉDÉ D'AIDE AU PILOTAGE POUR UN PILOTE DANS UN AÉRONEF, SYSTÈME ÉLECTRONIQUE D'AIDE AU PILOTAGE ET PRODUIT PROGRAMME D'ORDINATEUR ASSOCIÉS**

(30) Priorité: 15.04.2025 FR 2504033
(71) Demandeur: THALES, 92190 Meudon (FR); Centre National de la Recherche Scientifique, 75016 Paris (FR)
(72) Inventeur: DE GRANCEY, Florence, 31100 TOULOUSE (FR); AMARI, Youssef, 31100 TOULOUSE (FR); WAESELYNCK, Hélène, 31400 TOULOUSE (FR); LELEUX, Philippe, 31400 TOULOUSE (FR)
(74) Mandataire: Lavoix

(57) **Abrégé**

La présente invention concerne procédé (1000) d'aide au pilotage pour un pilote dans un aéronef. Le procédé comprend une phase d'enrichissement (1100) comprenant :
- réception (1110) d'une ontologie comprenant une base de données,
- génération (1120) d'une matrice représentative de l'ontologie, dite matrice initiale,
- application (1130), à la matrice initiale, d'opération(s) matricielle(s) issue(s) d'un ensemble de règles d'inférence, pour obtenir une matrice enrichie
- détermination (1140) d'au moins un nouvel axiome entre les données de la base de données par comparaison de la matrice enrichie avec la matrice initiale,
- enrichissement (1150) de l'ontologie par inclusion du ou des axiomes nouvellement déterminés dans la base de données, formant une ontologie enrichie.

Le procédé comprend en outre une phase de requête (1200), comprenant :
- acquisition (1210) d'une requête de la part du pilote,
- interrogation (1220) de l'ontologie enrichie,
- émission (1230) d'une réponse à la requête acquise.

## Description

La présente invention concerne un procédé d'aide au pilotage pour un pilote dans aéronef.

La présente invention concerne également un produit programme d'ordinateur et un dispositif électronique d'aide au pilotage propres à mettre en œuvre un tel procédé.

Dans le domaine de l'aéronautique, les pilotes sont régulièrement amenés à devoir prendre des décisions dans un laps de temps réduit. Afin de les assister dans la prise de décision, les cockpits des aéronefs incluent traditionnellement différents systèmes électroniques, tels que des ordinateurs de vol, aussi appelé FMS (de l'anglais Flight Management System) ainsi que des Interfaces Homme-Machine (IHM) avec lesquels les pilotes sont propres à interagir.

Ces systèmes sont propres à transmettre au pilote de l'aéronef différentes informations, par exemple par l'affichage en continue de la valeur de différents paramètres, tels que l'altitude, la pression extérieure ou encore la quantité de carburant.

Toutefois, lorsque le pilote est confronté à une situation peu classique ou le sortant de ses habitudes, il doit tout d'abord déterminer de quelles informations il a besoin avant de consulter les paramètres associés et d'en déduire les actions à prendre.

Cette analyse requière un temps précieux au pilote de l'aéronef avant même de prendre une quelconque action. Dans certain cas, ce temps perdu est un risque pour le bon déroulement du vol, voir pour la sureté des passagers dans les cas les plus extrêmes.

Aussi, il est également connu d'inclure, dans le système de pilotage, une forme d'intelligence, par exemple sous la forme d'un dialogueur (de l'anglais chatbot) avec lequel le pilote de l'aéronef est propre à dialoguer pour obtenir des informations pertinentes relativement à la situation qu'il rencontre.

Le dialogueur est alors généralement connecté à une base de données, par exemple sous la forme d'une ontologie stockant les informations relatives à la situation courante de l'aéronef. Le dialogueur interroge alors l'ontologie et fournit au pilote, les informations pertinentes.

Pour établir une telle base de données, différentes données sont initialement implémentés dans la base. Cependant, ces informations ne sont pas exhaustives en tant que tel et des informations additionnelles peuvent être déduites des données initiales. En outre, au cours de l'évolution de la situation, certaines données peuvent être mises à jour, par exemple depuis l'ordinateur de vol. Cette mise à jours modifie substantiellement les données de la base, si bien que certaines assertions présentes dans la base de données peuvent s'en retrouver caduques. A cet effet, différents algorithmes d'inférence existent. Ces algorithmes requièrent généralement une puissance de calcul substantielle.

En outre, afin de garantir l'accessibilité de l'information la base de données est alors embarquée dans l'aéronef.

Or, les systèmes embarqués sont caractérisés par des contraintes de taille et poids. Aussi, ces contraintes imposent nécessairement des restrictions de puissance de calcul et de taille de mémoire.

Aussi, le but de l'invention est de concilier ces deux problèmes en proposant un procédé permettant de fournir au pilote des informations de pilotage à jour tout en étant compatible avec les contraintes des systèmes embarqués.

A cet effet, la présente invention a pour objet un procédé d'aide au pilotage pour un pilote dans un aéronef, le procédé étant mis en œuvre par un système électronique d'aide au pilotage embarqué dans un aéronef, et comprenant une phase d'enrichissement comprenant les étapes suivantes :
- réception d'une ontologie comprenant une base de données,
   la base de données stockant une pluralité de données et au moins une pluralité d'axiomes, chaque axiome indiquant qu'une donnée respective est incluse dans une autre données respective de la base de données,
- génération d'une matrice représentative de l'ontologie, dite matrice initiale, la matrice initiale comprenant pour chaque donnée de la base de données, une ligne ou une colonne,
   pour chaque ligne et pour chaque colonne, la matrice initiale comportant un coefficient à valeur numérique, chaque coefficient de la matrice initiale étant non-nul si la base de données comprend un axiome selon lequel la donnée associée à la ligne de ce coefficient est incluse dans la donnée associée à la colonne de ce coefficient, chaque coefficient diagonal de la matrice initiale étant en outre non-nul,
- application, à la matrice initiale, d'au moins une opération matricielle issue d'un ensemble de règles d'inférence, pour obtenir une matrice, dite matrice enrichie, la matrice enrichie comprenant un plus grand nombre de coefficient non-nuls que la matrice initiale,
- détermination d'au moins un nouvel axiome entre les données de la base de données par comparaison de la matrice enrichie avec la matrice initiale,
- enrichissement de l'ontologie par inclusion du ou des axiomes nouvellement déterminés dans la base de données, pour former une ontologie enrichie,
le procédé comprenant en outre une phase de requête, comprenant les étapes suivantes :
- acquisition d'une requête de la part du pilote de l'aéronef,
- interrogation de l'ontologie enrichie,
- émission, à destination du pilote de l'aéronef, d'une réponse à la requête acquise

Le calcul matriciel permet de mettre en œuvre l'enrichissement de l'ontologie avec un coup de calcul particulièrement réduit. Aussi, ceci permet de rendre compatible la fourniture d'informations pertinentes au pilote, et l'implémentation dans un système embarqué.

Suivant d'autres aspects avantageux de l'invention, le procédé selon l'invention comprend une ou plusieurs des caractéristiques suivantes, prises isolément ou suivant toutes les combinaisons techniquement possibles :
- l'étape de génération comprend en outre, la génération d'une matrice, dite matrice d'inclusion, dont chaque coefficient est non-nul si et seulement si la base de donnée comprend un axiome selon lequel la donnée associée la ligne i de ce coefficient est incluse dans la donnée associée à la colonne j de ce coefficient,
   lors de l'étape d'application, l'au moins une opération matricielle comprend l'opération suivante : $A + = A . B$
   où
   *A* est la matrice initiale,
   *B* est la matrice d'inclusion,
   . est le produit matriciel, et
   += est l'affectation après addition de la matrice initiale avec le résultat du produit matricielle *A. B,* l'addition étant de préférence une somme booléenne ;
- l'ontologie comprend en outre une base de relations stockant au moins une relation destinée à lier deux données entre elles,
   l'étape de génération comprenant en outre la génération d'une matrice dite matrice existentielle,
   chaque coefficient de ligne i et de colonne j, de la matrice existentielle étant non-nul si et seulement si :
      ∘ la base de relations comprend au moins une relation,
      ∘ la base de données comprend une donnée respective associée à la ligne i, dite donnée complexe, correspondant à l'ensemble formé par des données qui sont au moins en relation avec la donnée associée à la colonne j,
   l'étape de génération comprenant en outre la génération, pour chaque relation de la base de relation, d'une matrice respective, dite matrice de restriction pour ladite relation,
   pour chaque relation, chaque coefficient de ligne i et de colonne j, de la matrice de restriction étant non-nul si et seulement si :
      ∘ la base de relations comprend la relation,
      ∘ la base de données comprend une donnée respective, dite donnée complexe, correspondant à l'ensemble formé par des données qui sont au moins en relation avec la donnée associée à la ligne i et la colonne j, selon ladite relation,
   lors de l'étape d'application, l'au moins une opération matricielle comprend l'opération suivante : $A + = A . \left({\sum }_{R} {Ψ}^{R} . Π . A . {Π}^{T} . {Ψ}^{{R}^{T}}\right)$
   où
   *A* est la matrice initiale,
   Σ*_{R}* 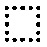 est la somme sur chaque relation de la base de relations,
   ψ*^{R}* est la matrice restriction associée à la relation R,
   Π est la matrice existentielle,
   . est le produit matriciel,
   Π*^{T}* est la transposée de la matrice existentielle,
   ψ*^{R^{T}}* est la transposée de la matrice de restriction associée à la relation R, et
   += est l'affectation après addition de la matrice initiale avec le résultat du produit matricielle *A.* Π. *A.* Π*^{T},* l'addition étant de préférence une somme booléenne :
- l'ontologie comprend en outre une base de relations propre à stocker des relations respectivement destinées à liées deux données de la base de données,
   l'étape de génération comprend en outre, la génération d'une matrice, dite matrice d'inclusion de relations,
   chaque coefficient de ligne i et de colonne j de la matrice d'inclusion de relation est non-nulle si et seulement si :
      ∘ la base de relations comprend une première relation et une deuxième relation distincte de la première relation,
      ∘ la base de relations comprend en outre un axiome, dit de hiérarchie, selon lequel la première relation est hiérarchiquement incluse dans la deuxième relation,
      ∘ la base de données comprend au moins une donnée, dite première donnée complexe, correspondant à l'ensemble formé par des données qui sont au moins en relation avec une donnée spécifique de la base de données, selon la première relation,
         la première donnée complexe étant la donnée associée à la ligne i dudit coefficient, et
      ∘ la base de données comprend une donnée respective, dite deuxième donnée complexe, correspondant à l'ensemble formé par des données qui sont au moins en relation avec la même donnée spécifique, selon la deuxième relation,
   la deuxième donnée complexe étant la donnée associée à la colonne j dudit coefficient,
   lors de l'étape d'application, l'au moins une opération matricielle comprend l'opération suivante : $A + = A . Γ$
   où
   *A* est la matrice initiale,
   Γ est la matrice d'inclusion de relation,
   . est le produit matriciel, et
   += est l'affectation après addition de la matrice initiale avec le résultat du produit matricielle *A.* Γ*,* l'addition étant de préférence une somme booléenne ;
- l'étape de génération comprend en outre, la génération d'une matrice, dite matrice de conjonction,
   chaque coefficient de la matrice de conjonction, de ligne i et de colonne j, est non-nul si et seulement si :
      ∘ la base de données comprend au moins une donnée, dite donnée complexe, correspondant à l'intersection entre une première et une deuxième données respectives de la base de données,
         ladite donnée complexe étant associée à la ligne i, et
      ∘ l'une parmi la première et la deuxième données est associée à la colonne j,
   lors de l'étape d'application, l'au moins une opération matricielle comprend l'opération suivante : $A + = A . K$
   où :
      *A* est la matrice initiale,
      *K* est la matrice de conjonction,
      . est le produit matriciel, et
      += est l'affectation après addition de la matrice initiale avec le résultat du produit matricielle *A. K,* l'addition étant de préférence une somme booléenne ;
- l'étape de génération comprend en outre, la génération d'une matrice, dite matrice de conjonction gauche,
   chaque coefficient, de ligne i et de colonne j, de la matrice de conjonction gauche étant non-nul si et seulement si :
      ∘ la base de données comprend au moins une donnée, dite donnée complexe, correspondant à l'intersection entre une première et une deuxième données respectives de la base de données,
         ladite donnée complexe étant associée à la ligne i, et
      ∘ la première donnée est associée à la colonne j,
   l'étape de génération comprenant en outre la génération d'une matrice, dite matrice de de conjonction droite,
   chaque coefficient de ligne i et de colonne j de la matrice de conjonction droite étant non-nul si et seulement si :
      ∘ la base de données comprend au moins une donnée, dite donnée complexe, correspondant à l'intersection entre une première et une deuxième données respectives de la base de données,
         ladite donnée complexe étant associée à la ligne i, et
      ∘ la deuxième donnée est associée à la colonne j,
   lors de l'étape d'application, l'au moins une opération matricielle comprend l'opération suivante : $A + = A . {K}^{{\left(1\right)}^{T}} oA . {K}^{{\left(2\right)}^{T}}$
   où :
      *A* est la matrice initiale,
      *K*^{(1)^{T}} est la transposée de la matrice de conjonction gauche,
      *K*^{(2)^{T}} est la transposée de la matrice de conjonction droite,
      . est le produit matriciel,
      *o* est le produit d'Hadamard, et
      += est l'affectation après addition de la matrice initiale avec le résultat du produit matricielle *A. K*^{(1)^{T}} *oA. K*^{(2)^{T}}*,* l'addition étant de préférence une somme booléenne ;
- l'ontologie comprend en outre une base de relations propre à stocker des relations respectivement destinées à lier deux données de la base de données,
   l'étape de génération comprenant en outre, la génération d'une matrice, dite matrice d'inclusion de relation,
   chaque coefficient de ligne i et de colonne j, de la matrice d'inclusion de relation étant non-nulle si et seulement si :
      ∘ la base de relations comprend une première relation et une deuxième relation,
      ∘ la base de relations comprend en outre un axiome de hiérarchie selon lequel la première relation est hiérarchiquement incluse dans la deuxième relation,
      ∘ la base de données comprend une donnée respective, dite première donnée complexe, correspondant à l'ensemble formé par des données qui sont au moins en relation avec une donnée spécifique de la base de données, selon la première relation,
   la première donnée complexe étant la donnée associée à la ligne i, et
      ∘ la base de données comprend une donnée respective, dite deuxième donnée complexe, correspondant à l'ensemble formé par des données qui sont au moins en relation avec la même donnée spécifique de la base de données, selon la deuxième relation,
   la deuxième donnée complexe étant la donnée associée à la colonne j,
   l'étape de génération comprenant en outre la génération d'une matrice dite matrice existentielle,
   chaque coefficient de ligne i et de colonne j, de la matrice existentielle étant non-nul si et seulement si :
      ∘ la base de relations comprend au moins une relation,
      ∘ la base de données comprend une donnée respective associée à la ligne i, dite donnée complexe, correspondant à l'ensemble formé par des données qui sont au moins en relation avec la données associée à la colonne j,
   l'étape de génération comprenant en outre la génération, pour chaque relation de la base de relation, d'une matrice respective, dite matrice de restriction pour ladite relation,
   pour chaque relation, chaque coefficient de ligne i et de colonne j, de la matrice de restriction étant non-nul si et seulement si :
      ∘ la base de relations comprend la relation,
      ∘ la base de données comprend une donnée respective, dite donnée complexe, correspondant à l'ensemble formé par des données qui sont au moins en relation avec la donnée associée à la ligne i et la colonne j, selon ladite relation,
   lors de l'étape d'application, l'au moins une opération matricielle comprend l'opération suivante : $A + = A . \left({\sum }_{R} {Ψ}^{R} . Π . A . {Π}^{T} . {Ψ}^{{R}^{T}}\right) . Γ$
   où :
      *A* est la matrice initiale,
      Σ*_{R}* 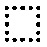 est la somme sur chaque relation de la base de relations,
      ψ*^{R}* est la matrice de restriction associée à la relation R,
      Π est la matrice existentielle,
      Π*^{T}* est la transposée de la matrice existentielle,
      ψ*^{R^{T}}* est la transposée de la matrice de restriction associée à la relation R,
      Γ est la matrice d'inclusion de relations,
      . est le produit matriciel, et
      += est l'affectation après addition de la matrice initiale avec le résultat du produit matricielle *A. K,* l'addition étant de préférence une somme booléenne ;
- la base de données comprend une donnée correspondant à l'ensemble vide, l'étape de génération comprend en outre, la génération d'une matrice, dite matrice de détection d'incohérence, dont seul le coefficient diagonal associée à l'ensemble vide est non-nul,
   l'étape de génération comprenant en outre la génération d'une matrice, dite matrice existentielle,
   chaque coefficient de ligne i et de colonne j, de la matrice existentielle étant non-nul si et seulement si :
      ∘ la base de relations comprend au moins une relation,
      ∘ la base de données comprend une donnée respective associée à la ligne i, dite donnée complexe, correspondant à l'ensemble formé par des données qui sont au moins en relation avec la donnée associée à la colonne j,
   lors de l'étape d'application, l'au moins une opération matricielle comprend l'opération suivante : $A + = A . Π . A . {I}_{⊥}$
   où :
      *A* est la matrice initiale,
      Π est la matrice existentielle,
      *I*_{⊥} est la matrice de détection d'incohérence,
      . est le produit matriciel, et
      += est l'affectation après addition de la matrice initiale avec le résultat du produit matricielle *A. K,* l'addition étant de préférence une somme booléenne,
      la phase d'enrichissement comprenant en outre une étape de détection d'incohérence dans l'ontologie si la matrice enrichie comprend un coefficient non-nul sur la colonne associée associé à l'ensemble vide, et absente de la matrice initiale,
      le procédé comprenant alors l'inhibition de l'étape d'enrichissement, et de l'étape d'acquisition de la phase de requête,
      la phase de requête comprenant alors une étape d'alerte à destination du pilote, d'une incohérence dans l'ontologie ;
- lors de l'étape de détermination, un nouvel axiome est déterminé pour chaque coefficient qui est non-nul dans la matrice enrichie et nul dans la matrice initiale ;
- lors de l'étape d'application, au moins deux opérations matricielles sont appliquées, lors de l'application de chaque opération matricielle excepté la première opération matricielle, la matrice initiale à laquelle est appliquée ladite opération matricielle étant la matrice résultant de l'opération matricielle précédente ; et
- les matrices sont des matrices creuses.

L'invention concerne également un système électronique d'aide au pilotage pour un pilote dans un aéronef, le système électronique d'aide au pilotage étant embarqué dans l'aéronef, et comprenant un dispositif d'enrichissement comprenant :
- un module de réception configuré pour recevoir une ontologie comprenant une base de données,
   la base de données stockant une pluralité de données et au moins une pluralité d'axiomes, chaque axiome indiquant qu'une donnée respective est incluse dans une autre données respective de la base de données,
- un module de génération configuré pour générer une matrice représentative de l'ontologie, dite matrice initiale, la matrice initiale comprenant pour chaque donnée de la base de données, une ligne ou une colonne,
   pour chaque ligne et pour chaque colonne, la matrice initiale comportant un coefficient à valeur numérique, chaque coefficient de la matrice initiale étant non-nul si la base de données comprend un axiome selon lequel la donnée associée à la ligne de ce coefficient est incluse dans la donnée associée à la colonne de ce coefficient, chaque coefficient diagonal de la matrice initiale étant en outre non-nul,
- un module d'application configuré pour appliquer, à la matrice initiale, d'au moins une opération matricielle issue d'un ensemble de règles d'inférence, pour obtenir une matrice, dite matrice enrichie, la matrice enrichie comprenant un plus grand nombre de coefficient non-nuls que la matrice initiale,
- un module de détermination configuré pour déterminer au moins un nouvel axiome entre les données de la base de données par comparaison de la matrice enrichie avec la matrice initiale,
- un module d'enrichissement configuré pour enrichir l'ontologie par inclusion du ou des axiomes nouvellement déterminés dans la base de données, pour former une ontologie enrichie,
le système électronique d'aide au pilotage comprenant en outre une interface homme-machine, comprenant :
- un module d'acquisition configuré pour acquérir une requête de la part du pilote de l'aéronef,
- un module de traitement configuré pour traiter la requête en interrogeant de l'ontologie enrichie,
- un module d'émission configuré pour émettre, à destination du pilote de l'aéronef, d'une réponse à la requête acquise.

L'invention concerne également un programme d'ordinateur comportant des instructions logicielles qui, lorsqu'elles sont exécutées par un ordinateur, mettent en œuvre un procédé d'aide au pilotage tel que défini ci-dessus.

Suivant un aspect avantageux de l'invention, le système comprend la caractéristique suivante :
- le dispositif électronique d'enrichissement comprend au moins l'un parmi : un circuit prédiffusé programmable, un processeur graphique, un processeur tensoriel, ou un processeur.

[Fig. 1] la figure 1 est une représentation schématique d'un cockpit d'un aéronef incluant le système d'aide au pilotage selon l'invention ;
[Fig. 2] la figure 2 est une représentation schématique détaillée du système d'aide au pilotage de la figure 1 ; et
[Fig. 3] la figure 3 est un organigramme d'un procédé d'aide au pilotage selon l'invention,

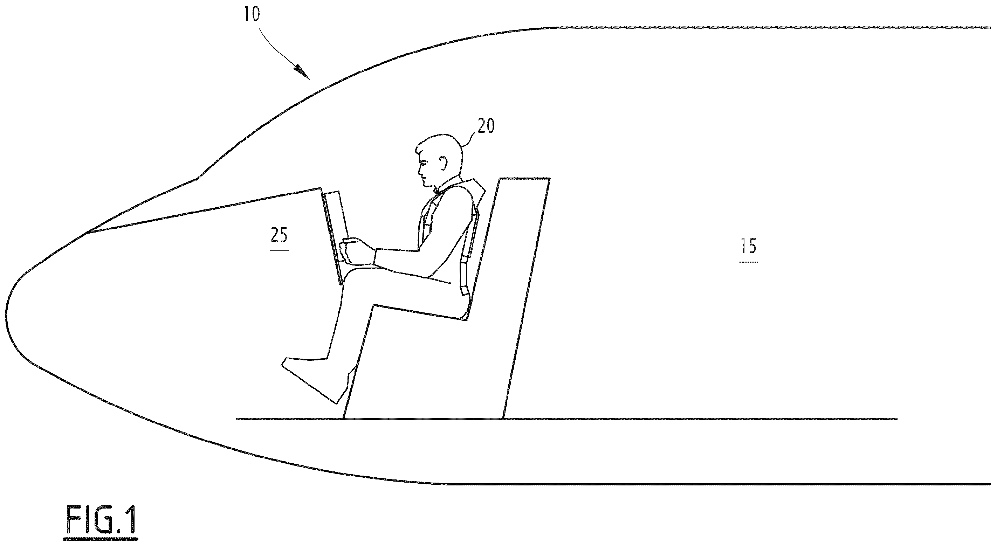

La figure 1 représente le cockpit 10 d'un aéronef 15. Dans le cockpit 10 sont représentés et un pilote 20 de l'aéronef 15, et un système électronique d'aide au pilotage 25.

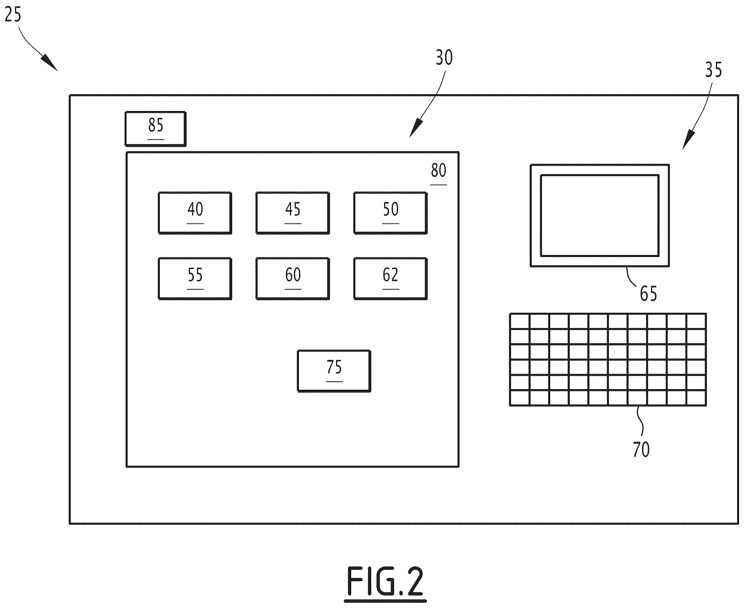

En référence à la figure 2, le système d'aide au pilotage 25 comprend un dispositif d'enrichissement 30 et une interface homme-machine 35, aussi appelée IHM 35.

Le dispositif d'enrichissement 30 est préférentiellement connecté à un ordinateur de vol de l'aéronef non-représenté.

Le dispositif d'enrichissement 30 comprend un module 40 de réception d'une ontologie, un module 45 de génération d'une matrice représentative de l'ontologie, un module 50 d'application d'opération matricielle, un module de détermination 55 et un module 60 d'enrichissement de l'ontologie, et optionnellement un module de détection d'incohérence 62.

L'IHM 35 comprend quant à elle, par exemple un écran d'affichage 65, un module d'acquisition 70 et un module de traitement 75.

Dans l'exemple de la figure 1, le système d'aide au pilotage 25 comprend une unité de traitement d'informations formée par exemple d'une mémoire 80 et d'un processeur 85 associé à la mémoire 80. Le processeur 85 est de préférence choisi parmi, un processeur graphique aussi appelé GPU (de l'anglais Graphic Processing Unit), un processeur tensoriel aussi appelé TPU (de l'anglais Tensor Processing Unit) ou un processeur classique aussi appelé CPU (de l'anglais Central Processing Unit).

Dans l'exemple de la figure 1, le module de réception 40, le module de génération 45, le module d'application 50, le module de détermination 55 et le module d'enrichissement 60 et le module de traitement 75, et optionnellement le module de détection d'incohérence 62, sont réalisés chacun sous forme d'un logiciel, ou d'une brique logicielle, exécutable par le processeur 85. La mémoire 80 du système d'aide au pilotage 25 est alors apte à stocker un logiciel de réception, un logiciel de génération, un logiciel d'application, un logiciel de détermination, un logiciel d'enrichissement, un logiciel de traitement, et optionnellement un logiciel de détection d'incohérence. Le processeur 85 est alors apte à exécuter chacun des logiciels parmi le logiciel de réception, le logiciel de génération, le logiciel d'application, le logiciel de détermination, le logiciel d'enrichissement, le logiciel de traitement et optionnellement le logiciel détection d'incohérence.

En variante non représentée, le module de réception 40, le module de génération 45, le module d'application 50, le module de détermination 55 et le module d'enrichissement 60 et le module de traitement 75, et optionnellement le module de détection d'incohérence 62, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*).

Lorsque le système électronique d'aide au pilotage 25 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le module de réception 40 est configuré pour recevoir une ontologie.

Une ontologie est un modèle de données contenant des concept(s) et relation(s) permettant de modéliser un ensemble de connaissances dans un domaine donné.

De manière connue en soit, l'ontologie comprend une base de données, aussi appelée Tbox, un raisonneur et optionnellement une base de relations aussi appelée Rbox.

La base de données Tbox comprend des données dites données atomiques, qui représentent des concepts de la base de données. Par exemple, les données telles que « avion », « aéroport » ou « piste » sont des données atomiques.

La base de relations optionelle stocke une ou plusieurs relations destinées à lier deux données entre elles. A titre d'exemple, « liéA » ou « faitPartieDe » sont des exemples de relations.

La base de données comprend en outre préférentiellement des données dites données complexes, et qui sont formées d'une ou plusieurs données atomiques et d'au moins un opérateur logique.

A titre d'exemple, des données complexes sont :
- l'intersection entre deux données atomiques, e.g. aéroport ET avion, aussi nommé : aéroport n avion, où n désigne l'opérateur d'intersection.
- des données faisant intervenir une relation, telle que l'ensemble des données qui sont au moins en relation avec une donnée spécifique, selon une relation spécifique, e.g. « 3 liéA.aéroport » désigne l'ensemble des données de la base de données qui sont au moins liées à l'aéroport, où 3 est l'opérateur existentiel et . désigne à quelle donnée s'applique la relation précédant ce point, les données du type « 3 R.*α*» où R est une relation et *α* une donnée étant aussi appelée restriction existentielle dans la littérature,
- des données faisant intervenir plusieurs relations, telle qu'une composition de relations. Par exemple, il s'agit de l'ensemble de données sont au moins en relation avec l'ensemble de données qui sont au moins en relation avec une donnée spécifique de la base de données, e.g. «3 faitPartiede *o* mèneA.Alerte » qui est : l'ensemble des données qui sont au moins en relation selon la relation « faitPartieDe » avec l'ensemble de données qui sont au moins en relation selon la relation « mèneA » avec la donnée « Alerte », où *o* est l'opérateur de composition. Autrement dit, cet exemple désigne l'ensemble des données qui au moins fait partie de l'ensemble de donnée qui au moins mène à une alerte.

Préférentiellement, la base de données comprend par défaut les deux données complexes suivantes : Thing et Bottom. Thing représente l'ensemble général de données dans lequel toutes les données de la base de données sont incluses. Bottom représente l'ensemble vide, dans lequel aucune donnée de la base de données n'est censée être incluse, à l'exception du Bottom lui-même.

La base de données comprend également des axiomes. Les axiomes sont des triplets d'informations qui stockent la connaissance de l'ontologie. En particulier, un axiome présente par exemple la structure suivante : « une première donnée de la base de données ; un opérateur ; une deuxième donnée de la base de données ». Dans ce cas, l'opérateur est de préférence choisi entre une inclusion ⊆ ou une équivalence ⇔.

Par exemple, un axiome indiquant que Charles De Gaule est un aéroport est écrit de la manière suivante : « Charles De Gaule ⊆ Aéroport ».

Similairement l'axiome indiquant que Charles de Gaule fait partie de l'ensemble des données au moins lié à la donnée « aéroport » est écrit de la manière suivante : « Charles De Gaule ; ⊆ ; 3 liéA.aéroport ».

Il est à noter qu'un axiome impliquant une équivalence peut se réécrire comme deux inclusions réciproques. Par exemple, un axiome indiquant que Charles De Gaule est équivalent à CDG s'écrit avec les deux axiomes suivants : « Charles De Gaule ⊆ CDG » et « CDG ⊆ Charles De Gaules ».

Similairement, la base de relations Rbox comprend préférentiellement au moins un axiome de hiérarchie indiquant qu'une relation est incluse dans une autre, traduisant une relation de hiérarchie. Un tel axiome se présente également préférentiellement sous la forme d'un triplet d'informations. Cependant, comparé aux axiomes de la base de données Tbox, les données y sont remplacées par des relations. Par exemple, « liéA ⊆ s_appliqueA » traduit que la relation « liéA » est incluse dans la relation « s_appliqueA ». Autrement dit, la relation « liéA » est une sous-relation de la relation « s_appliqueA ».

Optionnellement, la base de données comprend en outre une base d'instances de données Abox comprenant des instances. Les instances sont des données définies comme hiérarchiquement inférieures aux données de la base de données. A titre d'exemple, « CDG » est par exemple une instance de la donnée « Aéroport ». On comprend que la base d'instances Abox peut être réduite à la base de données Tbox en ajoutant l'instance comme une donnée de la base de données Tbox et en ajoutant un axiome selon lequel cette instance est incluse dans la donnée de la base de données Tbox qu'elle instancie.

Aussi, dans l'exemple de l'instance « CDG », la base d'instances Abox peut être supprimée en ajoutant l'instance « CDG » comme donnée de la base de données Tbox et en ajoutant l'axiome « *CDG* ⊆ *Aéroport* » à la base de données Tbox.

Aussi, sans perte de généralité, dans la suite du texte ci-après seul la base de données Tbox et la base de relations Rbox seront considérées.

A cet effet, l'ontologie est par exemple formulée dans le langage ontologique du web, i.e. le langage OWL connu en soit.

Préférentiellement, le langage choisi est le fragment OWL 2 EL (pour Existential Langage) du langage OWL. Ce dernier type de langage, dont une description est par exemple détaillée sur la page internet suivante : https://www.w3.org/TR/owl2-profiles/, impose des contraintes de structure sur les axiomes de la base de données.

Un exemple simplifié d'ontologie est donné ci-après. Par soucis de clarté et d'exploitabilité, l'exemple donné ci-après comprend un nombre bien plus faible de données, de relations, et d'axiomes que dans un cas réel.

Dans cet exemple d'ontologie, la base de données comprend les données atomiques suivantes :
- ApplicationARestriTemp,
- RestrictionTemporaire,
- LiaisonNotam,
- Notam,
- NotificationAéroUrgente,
- NotificationConditionAérodrome,
- NotificationUrgente,
- NotificationModificationMajeureEspaceAérien,
- Thing,
- NotificationZoneRestreinte,
- AvisSpécialEspaceAérien,
- NotificationTravaux,
- ObstaclePrèsDeLaPiste, et
- Bottom.

En outre, la base de données comprend les données complexes suivantes :
- 3 s_appliqueA.RestrictionTemporaire,
- 3 liéA.Notam,
- NotificationConditionAérodrome n NotificationAéroUrgente,
- 3 liéA.Thing,
- 3 mèneA.AvisSpécialEspaceAérien,
- 3 conduitA.AvisSpécialEspaceAérien,
- 3 faitPartieDe.NotificationConditionAérodrome,
- 3 liéA.RestrictionTemporaire,
- 3 faitPartieDe o mèneA.AvisSpécialEspaceAérien,
- NotificationZoneRestreinte n ObstaclePrèsDeLaPiste

En outre, la base de données comprend les axiomes suivants :
- ApplicationARestricTemp ⊆ 3 s_AppliqueA.RestrictionTemporaire,
- 3 s_AppliqueA.RestrictionTemporaire ⊆ ApplicationArestriTemp,
- LiaisonNotam ⊆ 3 liéA.Notam,
- 3 liéA.Notam ⊆ LiaisonNotam,
- NotificationAéroUrgente ⊆ NotificationConditionAérodrome n Notification Urgente,
- NotificationConditionAérodrome n NotificationUrgente ⊆ NotificationAéroUrgente,
- ApplicationARestriTemp ⊆ NotificationMajeureEspaceAérien,
- LiaisonNotam ⊆ NotificationUrgente,
- Notam ⊆ 3 liéA.Thing,
- NotificationAéroUrgente ⊆ NotificationZoneRestreinte,
- NotificationConditionAérodrom ⊆ Notam,
- NotificationConditionAérodrome ⊆ 3 mèneA.AvisSpécialEspaceAérien,
- NotificationModificationMajeureuEspaceAérien ⊆ Notam,
- NotificationModificationMajeureEspaceAérien ⊆ ∃ conduitA.AvisSpécialEspaceAérien,
- NotificationTravaux ⊆ 3 faitPartieDe.NotificationConditionAérodrome,
- NotificationTravaux ⊆ 3 liéA.RestrictionTemporaire,
- NotificationZoneRestreinte ⊆ 3 liéA.RestrictionTemporaire,
- ObstaclePrèsDeLaPiste ⊆ NotificationConditionAérodrome,
- ObstaclePrèsDeLaPiste ⊆ NotificationUrgente,
- ObstaclePrèsDeLaPiste ⊆ 3 faitPartieDe *o* mèneA. AvisSpécialEspaceAérien. En outre, la base de relation comprend les relations suivantes :
- liéA,
- s_appliqueA,
- faitPartieDe,
- mèneA, et
- conduitA.

La base de relation Rbox comprend en outre les axiomes de hiérarchie relatifs aux relations suivants :
- liéA ⊆ s_appliqueA, et
- faitPartieDe *o* mèneA ⊆ conduitA.

Optionnellement, le module de réception 40 est en outre configuré pour recevoir, depuis l'ordinateur de vol, des mises à jours de l'ontologie. En particulier, la mise à jour concerne par exemple la mise à jour des données de la base de données de l'ontologie.

Par exemple, la mise à jour est réalisée suite à la réception d'un message aux navigants aériens, aussi appelé NOTAM (de l'anglais Notice to Airmen), connu en soit.

Le module de génération 50 est configuré pour générer une matrice représentative de l'ontologie, dite matrice initiale A.

La matrice initiale comprend au moins une ligne ou une colonne pour chaque donnée, i.e. donnée atomique, et donnée complexe, de la base de données Tbox.

Préférentiellement la matrice initiale A est une matrice carrée. Elle comprend, pour chaque donnée, une ligne et une colonne.

La matrice initiale A comporte plusieurs coefficients à valeurs numériques *A*_{*i*,*j*} chacun identifié par une ligne *i* et une colonne *j* de ladite matrice A. Chaque coefficient *A_{i,j}* d'une ligne *i* et d'une colonne *j* respectives, a une valeur non-nulle si la base de données Tbox comporte un axiome selon lequel la donnée associée à la ligne *i* est incluse dans la donnée associée à la colonne *j*.

Préférentiellement, la matrice initiale A comprend également un coefficient non nul sur chaque ligne de la colonne associée à la donnée « Thing ». Ceci représente que chaque donnée de la base de données Tbox incluse dans la données « Thing ».

En outre, préférentiellement chaque coefficient diagonal de la matrice initiale A est de préférence non-nul. Ceci représente que chaque donnée Tbox est incluse dans elle-même.

Préférentiellement chaque coefficient de la matrice initiale A est un booléen. Autrement dit, chaque coefficient est préférentiellement égal à 0 ou à 1.

Dans l'exemple précédente, la matrice initiale A est par exemple égale à :

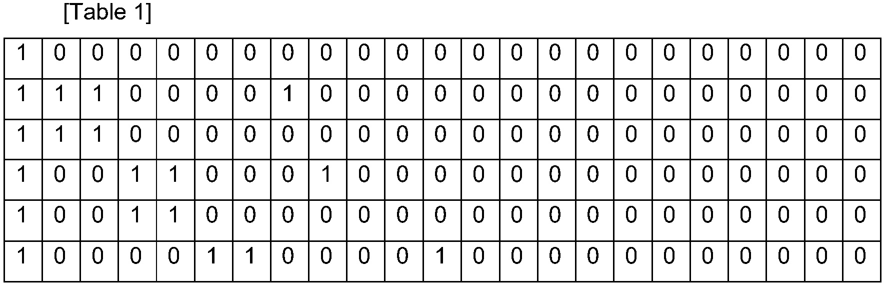

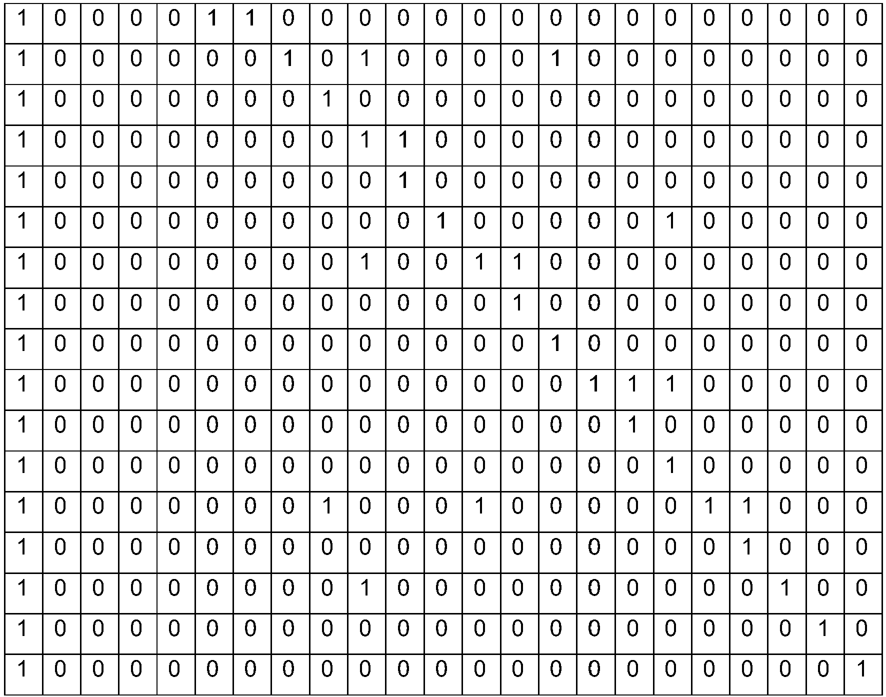

Par soucis de lisibilité, dans la suite de la description, les coefficients nuls des matrices ne seront pas écrits. Aussi, une case vide correspond à un coefficient nul.

Préférentiellement, le module de génération 50 est en outre configuré pour générer une table de consultation associant à chaque donnée de la base de données, un identifiant correspondant à la ligne et la colonne associées à cette donnée dans la matrice initiale A. Dans l'exemple précédent la table de consultation est par exemple la suivante :

**[Table 2]**

| | |
|---|---|
| Thing | 1 |
| ApplicationARestriTemp | 2 |
| ∃ s_applique.RestrictionTemporaire | 3 |
| LiaisonNotam | 4 |
| ∃ liéA.Notam | 5 |
| NotificationAéroUrgente | 6 |
| NotificationConditionAérodrome n NotificationUrgente | 7 |
| NotificationModificationMajeureEspaceAérien | 8 |
| NotificationUrgente | 9 |
| Notam | 10 |
| ∃ liéA.Thing | 11 |
| NotificationZoneRestreinte | 12 |
| NotificationConditionAérodrome | 13 |
| ∃ mèneA.AvisSpécialEspaceAérien | 14 |
| ∃ conduitA.AvisSpécialEspaceAérien | 15 |
| NotificationTravaux | 16 |
| ∃ faitPartieDe.NotificationConditionAérodrome | 17 |
| ∃ liéA.Restrictiontemporaire | 18 |
| Obstacle PrèsDeLa Piste | 19 |
| ∃ faitPartieDe *o* mèneA.AvisSpécialEspaceAérien | 20 |
| RestrictionTemporaire | 21 |
| AvisSpécialEspaceAérien | 22 |
| Bottom | 23 |

En outre, on comprend que la matrice initiale A est une matrice creuse. On entend ici par « matrice creuse », une matrice comportant un plus grand nombre de coefficient nuls que de coefficients non-nuls, préférentiellement au moins deux fois plus de coefficients nuls que de coefficients non-nuls, plus préférentiellement encore au moins dix fois plus de coefficients nuls que de coefficients non-nuls.

Préférentiellement, le module de génération 45 est en outre configuré pour générer d'autres matrices dont l'utilité sera détaillée ci-après.

En particulier, le module de génération 45 est préférentiellement configuré pour générer une matrice B, dite matrice d'inclusion. La matrice d'inclusion B comprend le même nombre de lignes et de colonnes que la matrice initiale A. Chaque coefficient *B_{i,j}* de la matrice d'inclusion B est de préférence non-nul si et seulement si la base de relations comprend une relation d'inclusion entre la donnée associée à la ligne *i* et la donnée associée à la colonne *j*.

Dans l'exemple précédent, la matrice d'inclusion B est la suivante.

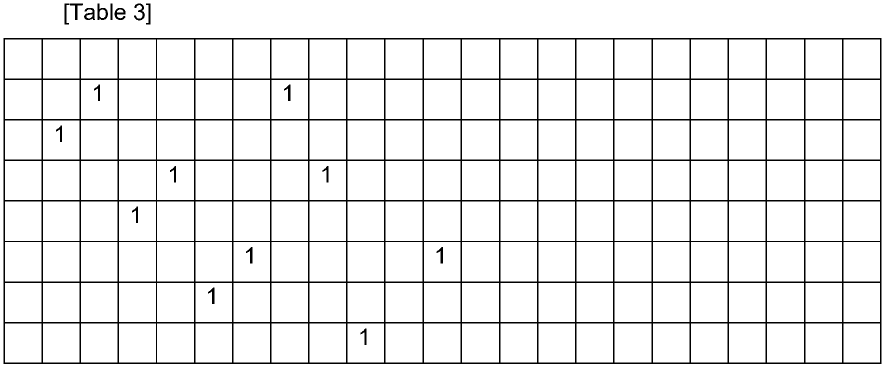

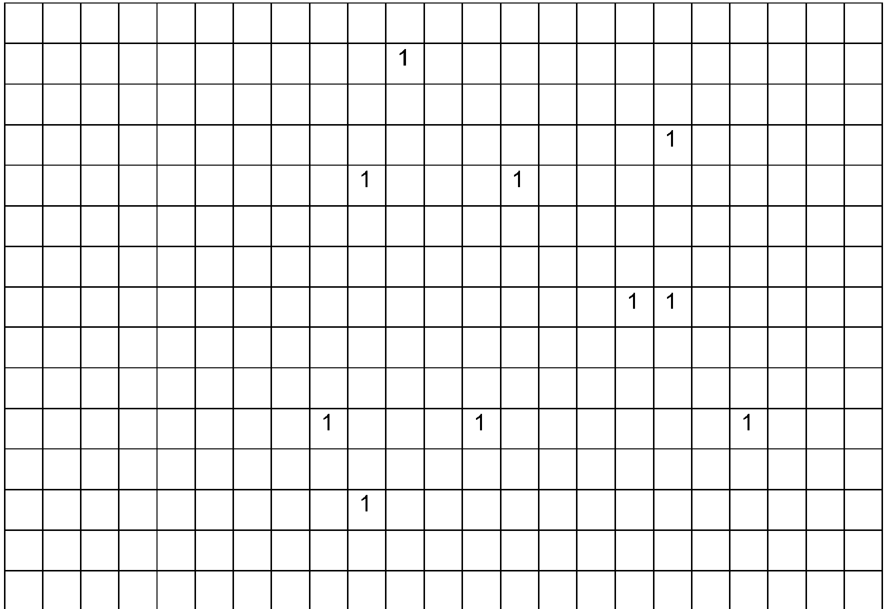

Lorsque la base de relations Rbox comprend au moins une relation R, le module de génération 45 est préférentiellement configuré pour générer un ensemble de matrices Ψ^{R}, dite matrice de restriction Ψ^{R} pour la relation R. Pour chaque relation de la Rbox, la matrice de restriction Ψ^{R} pour la relation R comprend préférentiellement le même nombre de lignes et de colonnes que la matrice initiale A.

Chaque coefficient diagonal Ψ^{R}_{i,i} de ligne i et de colonne i, de la matrice de restriction Ψ^{R} pour la relation R est non-nul si et seulement si :
o la base de relations Rbox comprend au moins une relation R,
o la base de données Tbox comprend une donnée complexe du type ∃*R*. *β*, correspondant à l'ensemble formé par des données qui sont au moins en relation avec la données *β* associée à la ligne i et la colonne i.

On comprend donc que chaque matrice de restriction Ψ*^{R}* est de préférence une matrice diagonale dans la mesure où elle ne comprend que des valeurs nulles sur les coefficients non-diagonaux.

Dans l'exemple précédent, la matrice de restriction Ψ^{liéA} pour la relation liéA est la suivante :

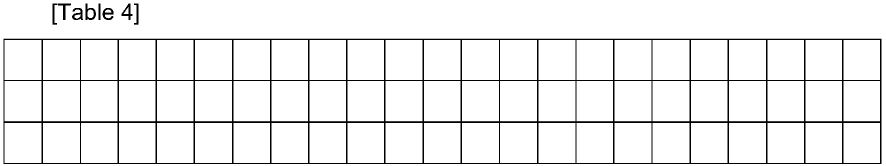

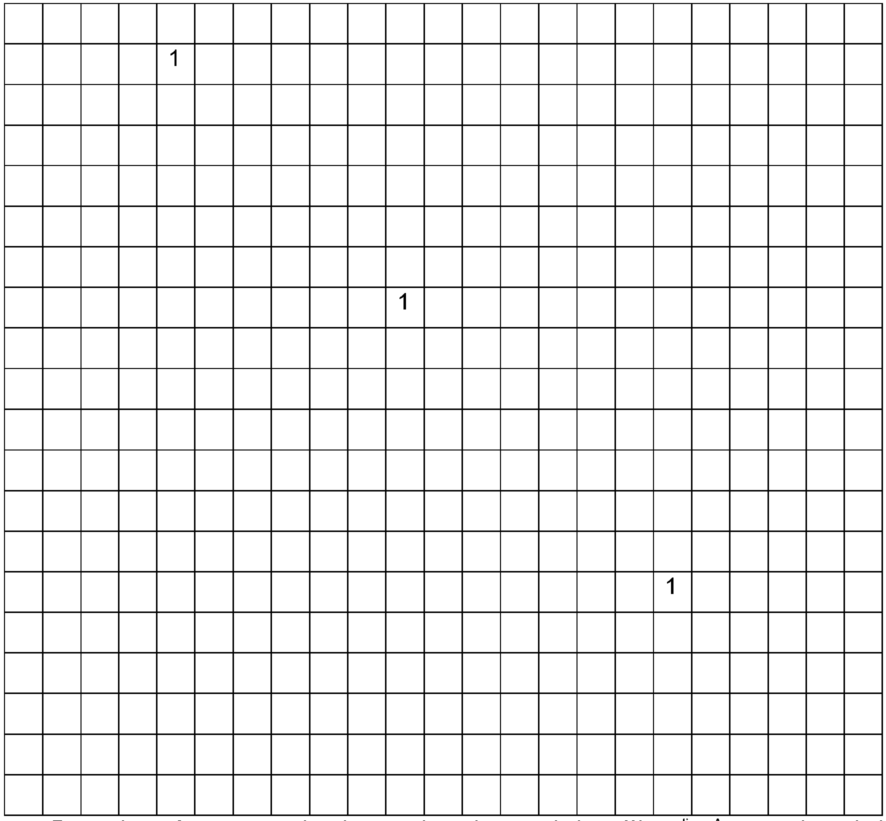

Dans le même exemple, la matrice de restriction Ψ^{s_appliqueA} pour la relation s_appliqueA est la suivante :

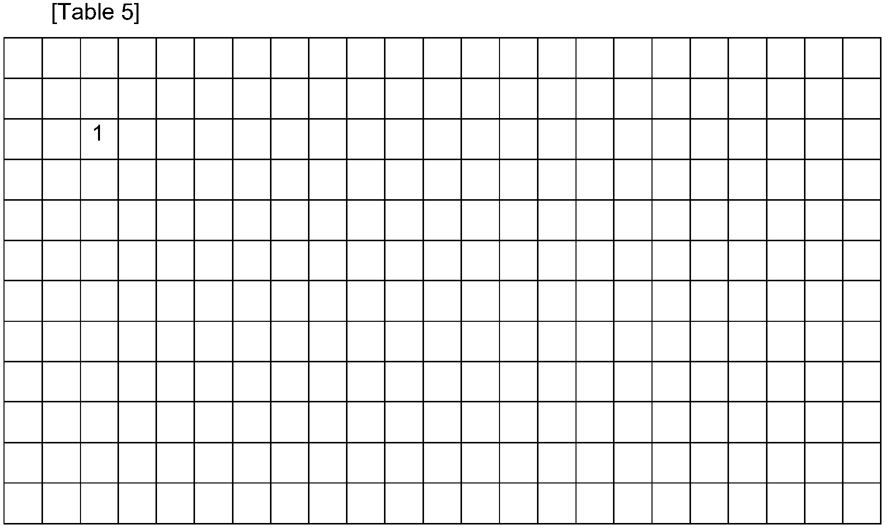

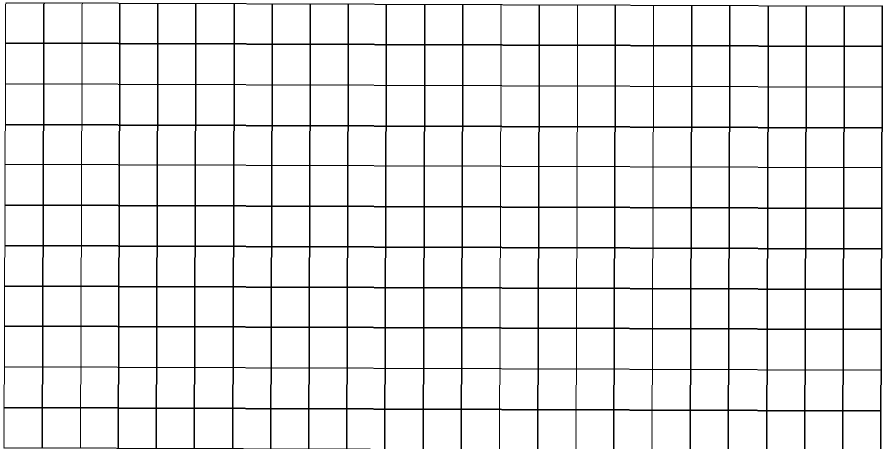

Dans le même précédent exemple, la matrice de restriction Ψ^{faitPartieDe} pour la relation faitPartieDe est la suivante :

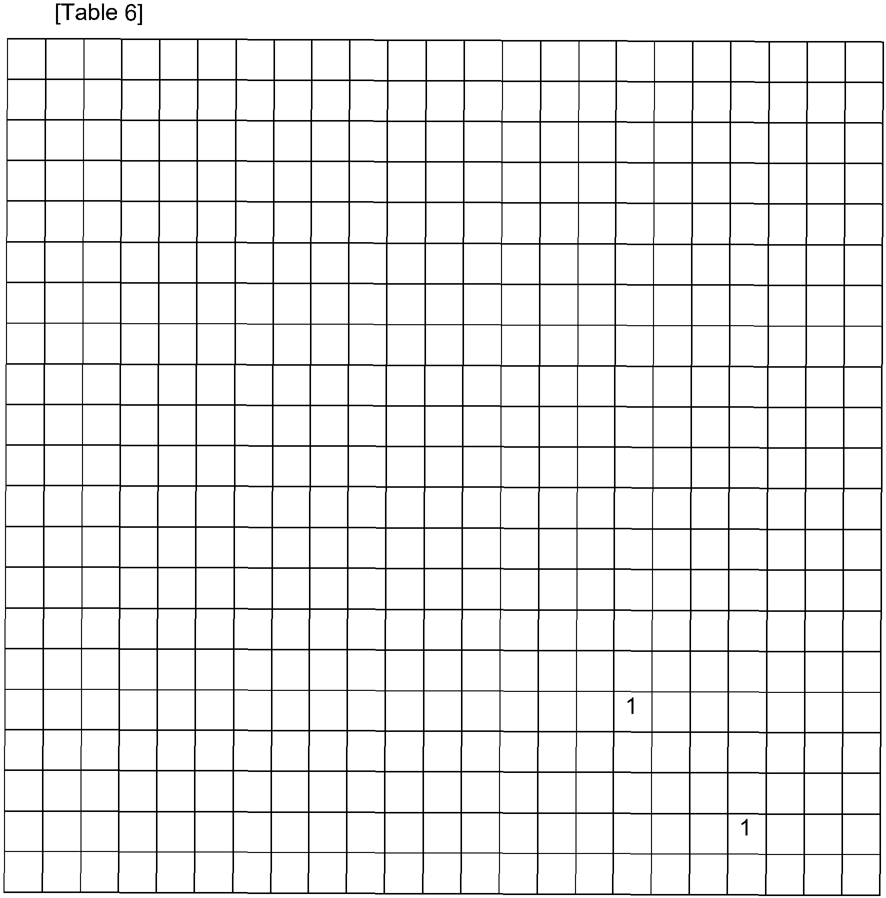

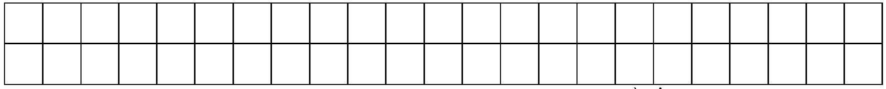

Dans le précédent exemple, la matrice de restriction Ψ^{méneA} pour la relation mèneA est la suivante :

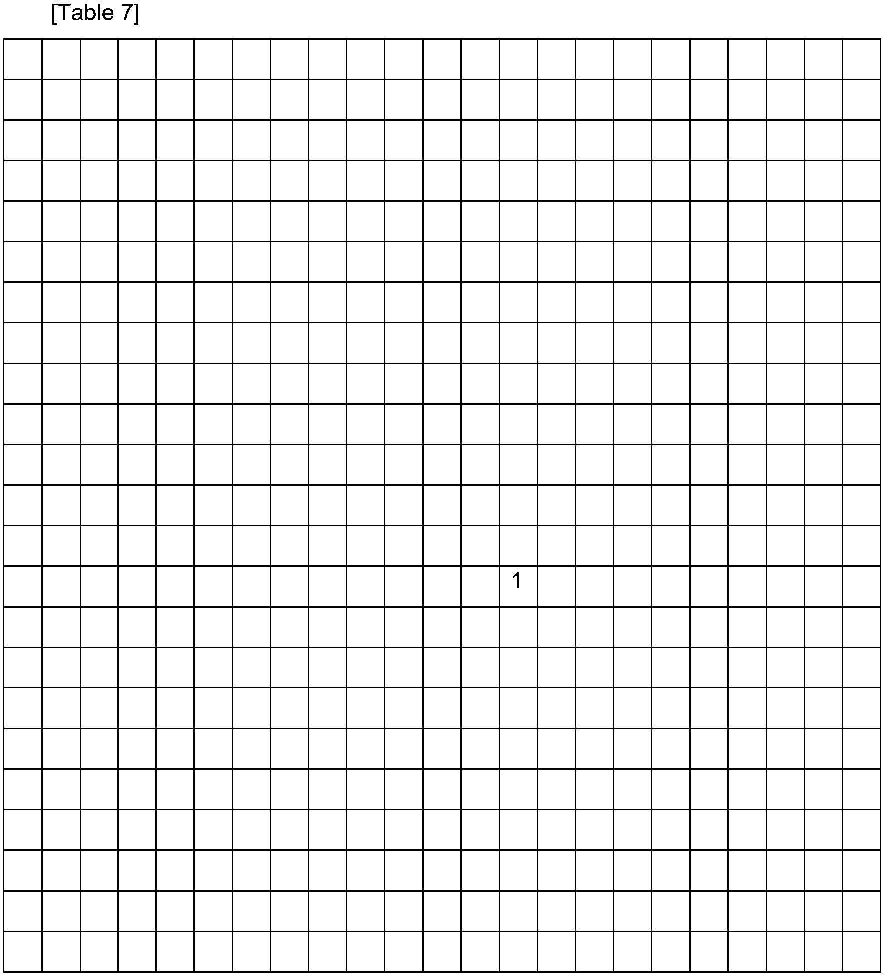

Dans le précédent exemple, la matrice de restriction Ψ^{conduitA} pour la relation conduitA est la suivante :

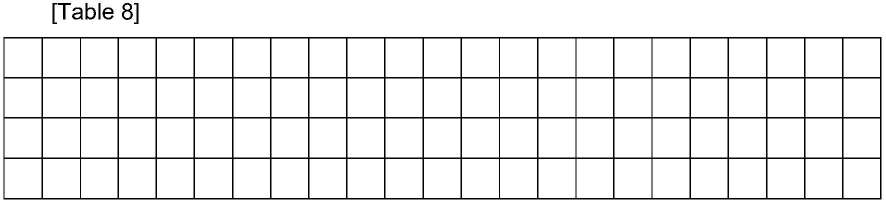

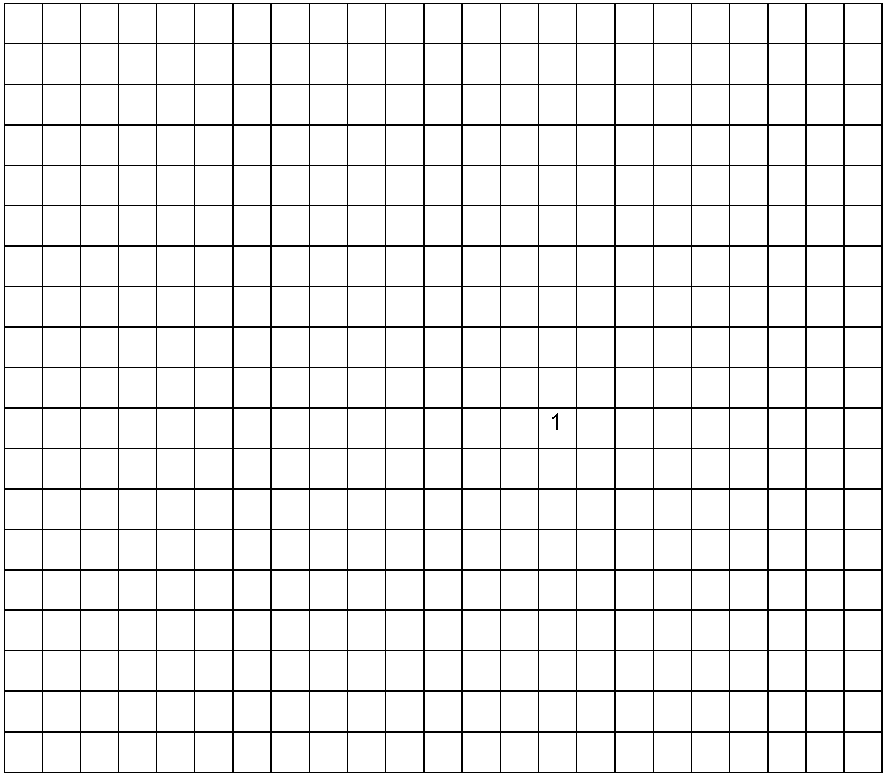

Le module de génération 45 est préférentiellement configuré pour générer une matrice Π, dite matrice existentielle Π. La matrice existentielle Π comprend préférentiellement le même nombre de lignes et de colonnes que la matrice initiale A.

Chaque coefficient Π_{i,j} de ligne i et de colonne j, de la matrice existentielle Π est non-nul si et seulement si :
- la base de relations Rbox comprend au moins une relation R,
- la base de données Tbox comprend une donnée complexe du type ∃*R*. *β* associé à la ligne i, correspondant à l'ensemble formé par des données qui sont au moins en relation avec la données *β* associée à la colonne j.

Dans l'exemple précédent, la matrice existentielle Π est la suivante :

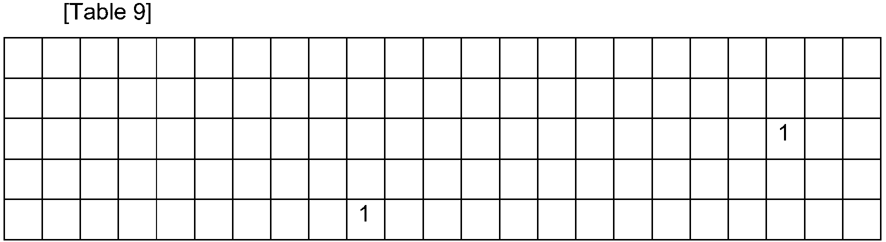

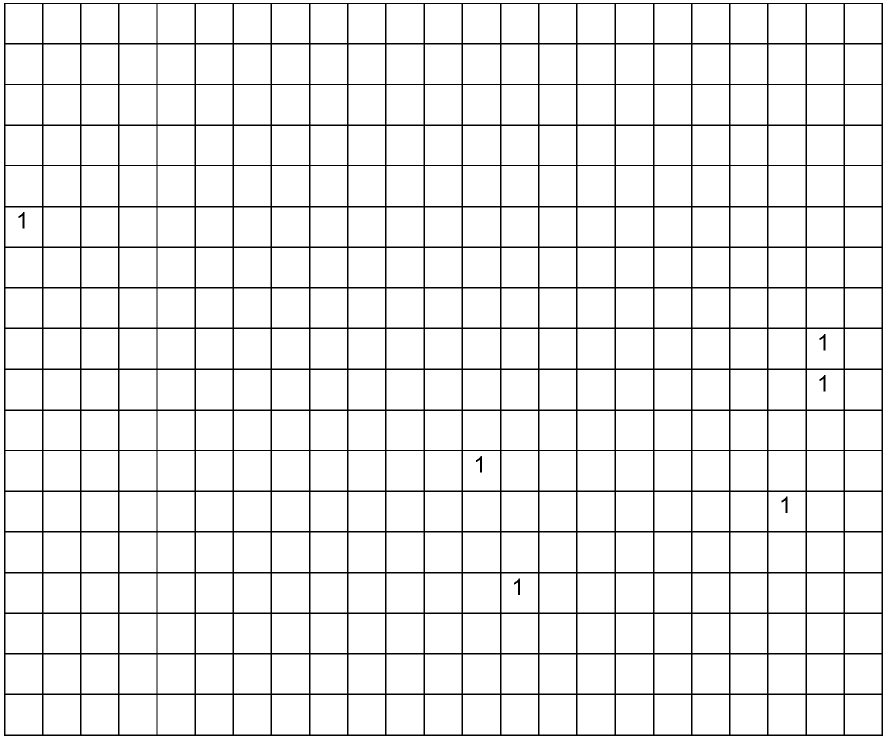

Le module de génération 45 est en outre configuré pour générer une matrice Γ, dite d'inclusion de relations Γ. La matrice d'inclusion de relations Γ comprend le même nombre de lignes et de colonnes que la matrice initiale A. Chaque coefficient Γ*_{i,j}* de ligne i et de colonne j, de la matrice d'inclusion de relations Γ est de préférence non-nul si et seulement si :
- la base de relations Rbox comprend une première relation R et une deuxième relation S distincte de la première relation R,
- la base de relations Rbox comprend en outre un axiome de hiérarchie « R ⊆ S », selon lequel la première relation R est hiérarchiquement incluse dans la deuxième relation S,
- la base de données Tbox comprend au moins une première donnée complexe, du type ∃*R. α,* correspondant à l'ensemble formé par des données qui sont au moins en relation avec une donnée spécifique *α* de la base de données Tbox, selon la première relation R,
   la première donnée complexe ∃*R*. *α* étant la donnée associée à la ligne i dudit coefficient Γ_{i,j}, et
- la base de données Tbox comprend une deuxième donnée complexe du type ∃*S*. *α* correspondant à l'ensemble formé par des données qui sont au moins en relation avec la même donnée spécifique *α*, selon la deuxième relation S,
   la deuxième donnée complexe ∃*S*. *α* étant la donnée associée à la colonne j dudit coefficient Γ_{i,j}.

Dans l'exemple précédent, la matrice d'inclusion de relations Γ est égale à :

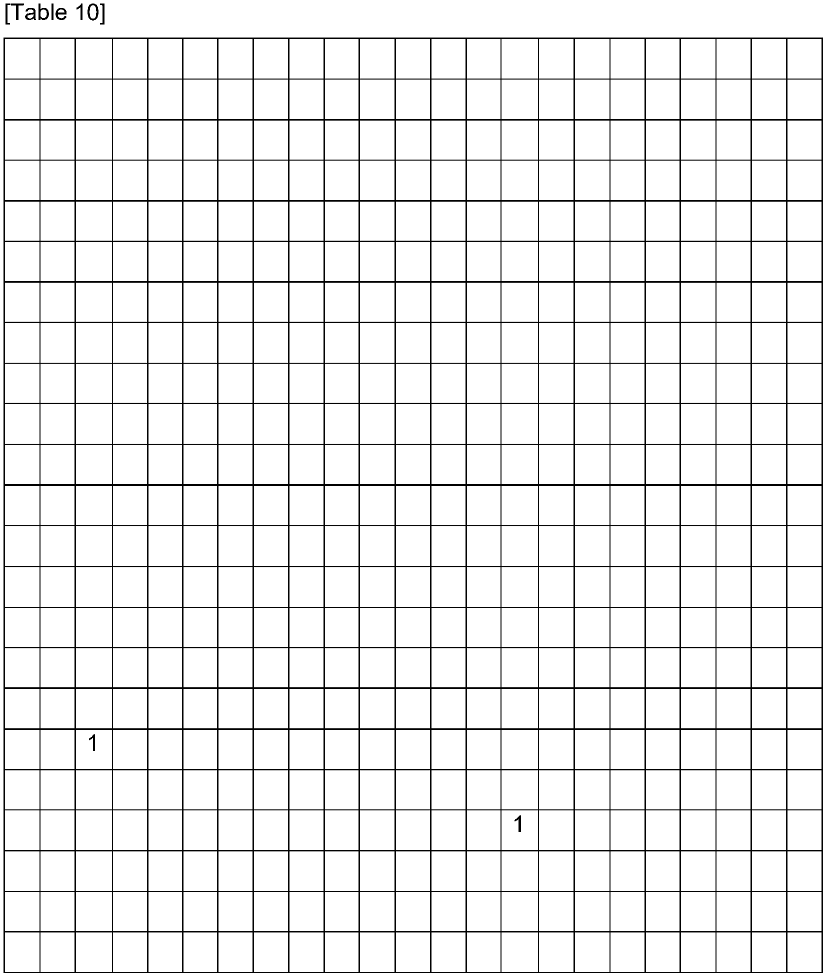

Le module de génération 45 est en outre configuré pour générer une matrice K, dite matrice de conjonction. La matrice de conjonction K comprend le même nombre de lignes et de colonnes que la matrice initiale A. Chaque coefficient *K*_{*i*,*j*} de ligne i et de colonne j, de la matrice de conjonction K est de préférence non-nul si et seulement si :
- la base de données Tbox comprend au moins une donnée complexe du type *α* n *β*, correspondant à l'intersection entre une première *α* et une deuxième *β* données respectives de la base de données Tbox,
   ladite donnée complexe *α* n *β* étant la données associée à la ligne i, et
- l'une parmi la première *α* et la deuxième *β* données est associée à la colonne j. Dans l'exemple précédent, la matrice de conjonction K est :

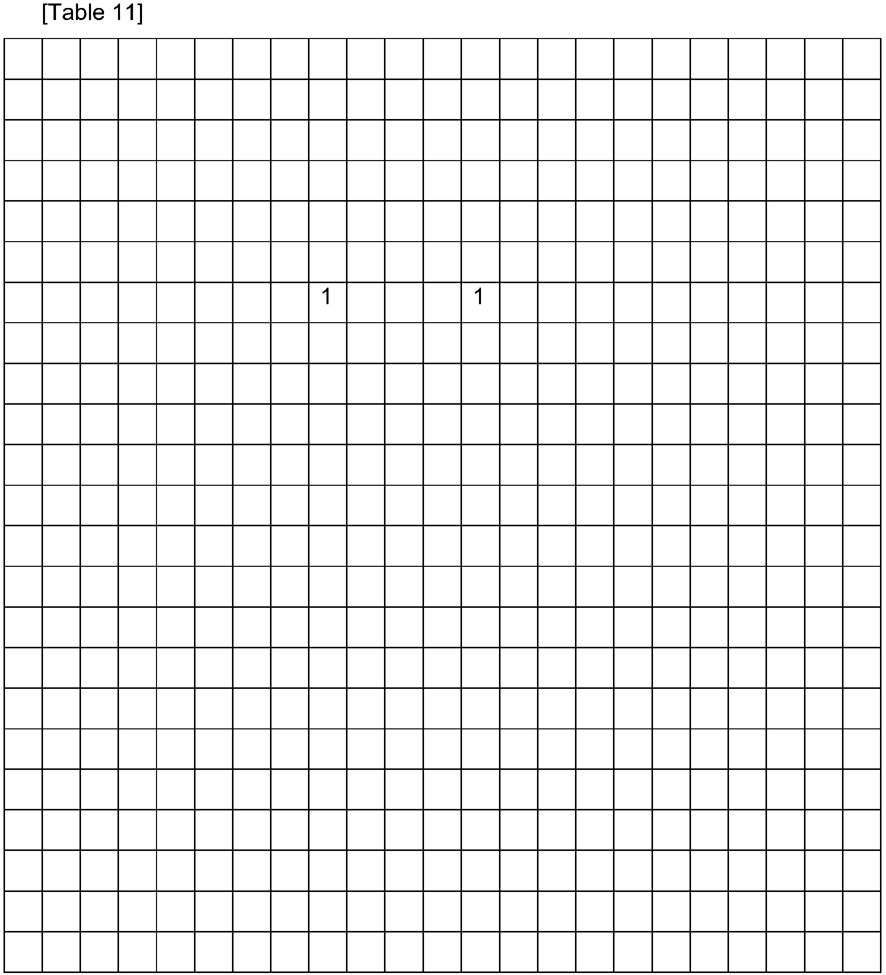

Le module de génération 45 est en outre configuré pour générer une matrice de conjonction gauche K⁽¹⁾ et une matrice de conjonction droit K⁽²⁾. Chacune de ces deux matrices comprend le même nombre de lignes et de colonnes que la matrice initiale A.

Chaque coefficient K⁽¹⁾_{i,j}, de ligne i et de colonne j, de la matrice de conjonction gauche K⁽¹⁾ est non-nul si et seulement si :
- la base de données Tbox comprend au moins une donnée complexe du type *α* n *β*, correspondant à l'intersection entre une première *α* et une deuxième *β* données respectives de la base de données,
   ladite donnée complexe *α* n *β* étant associée à la ligne i, et
- la première donnée *α* est associée à la colonne j,

Aussi dans l'exemple précédent, la matrice de conjonction gauche K⁽¹⁾ est égale à :

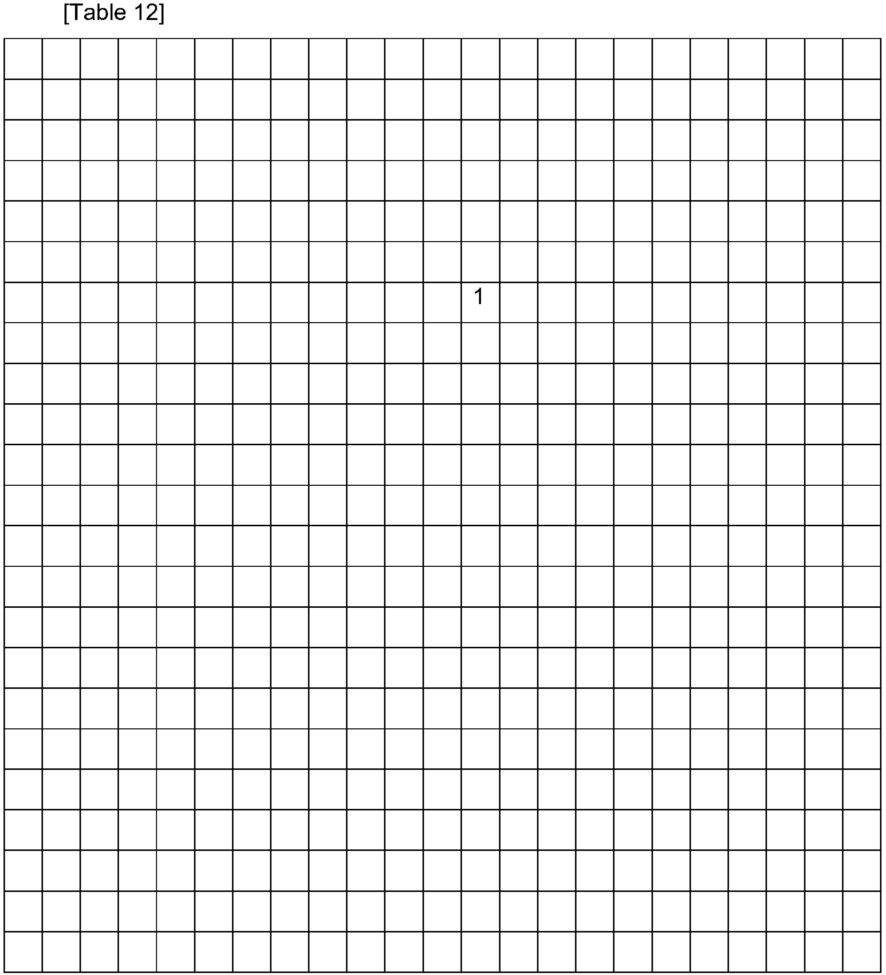

Chaque coefficient K⁽²⁾_{i,j} de ligne i et de colonne j de la matrice de conjonction droite K⁽²⁾ est non-nul si et seulement si :
- la base de données Tbox comprend au moins une donnée complexe du type *α* n *β*, correspondant à l'intersection entre une première *α* et une deuxième *β* données respectives de la base de données,
   ladite donnée complexe(*α* n *β* étant associée à la ligne i, et
- la deuxième donnée *β* est associée à la colonne j.

Dans l'exemple précédent, la matrice de conjonction droite K⁽²⁾ est égale à :

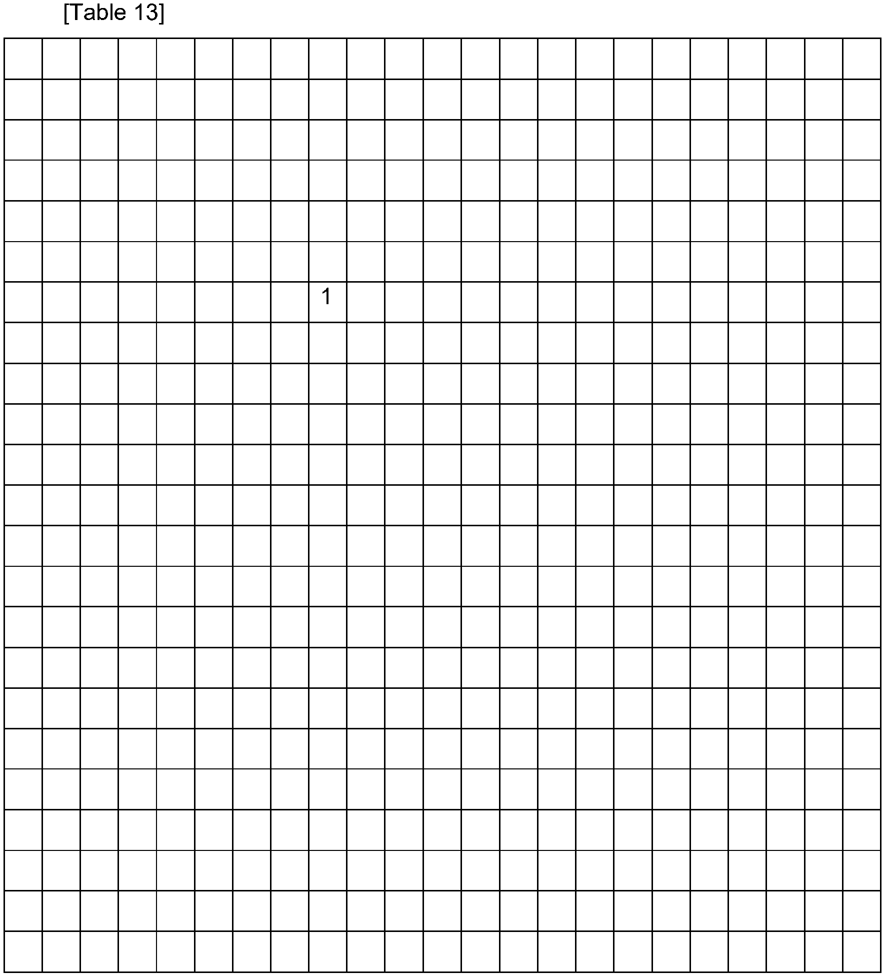

Le module de génération 45 est en outre configuré pour générer une matrice d'incohérence *I*_{⊥}. La matrice d'incohérence comprend le même nombre de lignes et de colonnes que la matrice initiale A. Chaque coefficient de la matrice d'incohérence *I*_{⊥} est nul à l'exception du coefficient diagonal correspondant à la ligne et la colonne dédiée à la détection d'incohérence, i.e. à la donnée Bottom.

Dans l'exemple précédent la matrice de détection d'incohérence *I*_{⊥} est égale à :

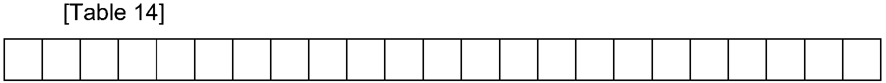

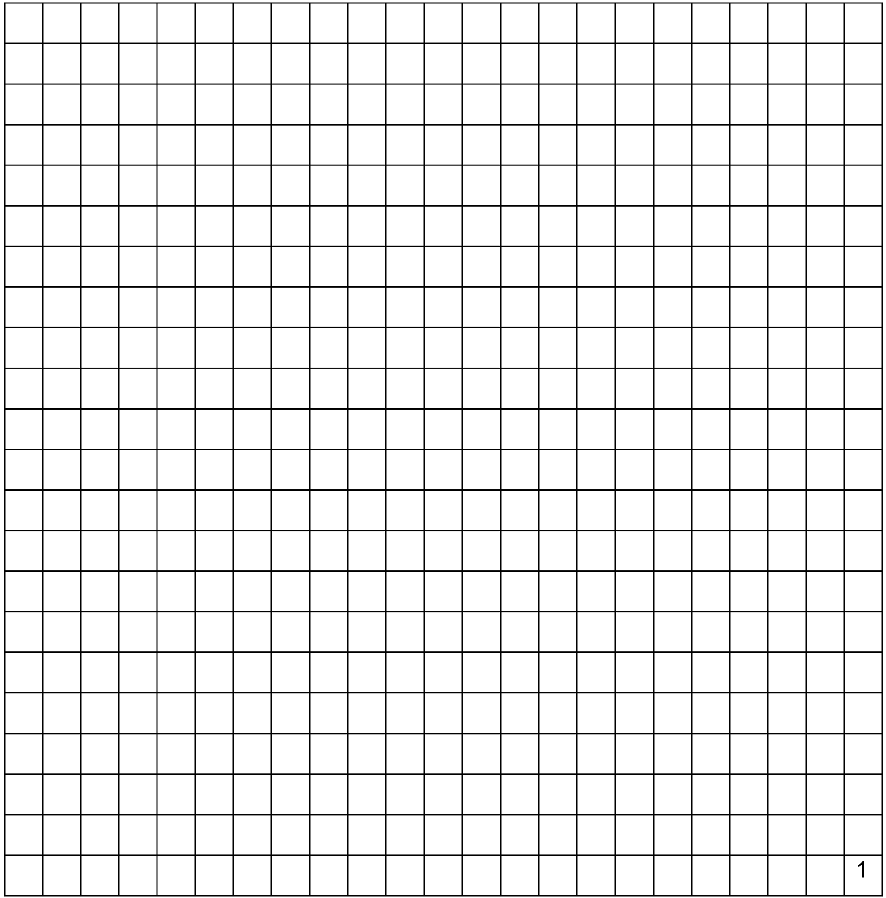

Comme visible sur l'exemple précité, toutes les matrices considérées sont préférentiellement creuses de sorte à ce que les opérations décrites ci-après puissent être implémentées avec une puissance de calcul et une mémoire particulièrement réduites.

Le module d'application 50 est configuré pour appliquer, à la matrice initiale A, au moins une opération issue d'un ensemble de règles d'inférence, pour obtenir une matrice, dite matrice enrichie A*, la matrice enrichie A* comprenant un plus grand nombre de coefficients ayant une valeur non-nulle que dans la matrice initiale A.

A titre d'exemple, les opérations sont choisies dans le groupe d'opérations suivant. Une première opération est la suivante : $A + = A . B$
où . est le produit matricielle, et
+= est l'affectation après addition de la matrice initiale A avec le résultat du produit matricielle *A. B.* L'addition considérée ici est de préférence la somme booléenne.

L'expression « somme booléenne » est entendue ici au sens que chaque coefficient d'une première matrice est sommé avec le coefficient de coordonnées identiques dans la deuxième matrice selon les règles suivantes :
- $0 + 0 = 0 ,$
- $0 + 1 = 1 ,$
- $1 + 0 = 1 ,$ et
- $1 + 1 = 1 .$

Cette opération permet d'appliquer la règle d'inférence *R*_{⊆}, dite règle d'inclusion *R*_{⊆}, qui exprime la transitivité des inclusions de données. En particulier, cette règle d'inclusion *R*_{⊆} permet de traduire que si une première donnée *α* est incluse dans une deuxième donnée *β* de la base de données, qui est elle-même incluse dans une troisième donnée *γ*, alors la première donnée est incluse dans la troisième donnée *γ*.

Dans l'exemple précédent, la base de données comprenait les axiomes « ObstaclePrèsDeLaPiste ⊆ NotificationConditionAérodrome » formant le coefficient 1 à la ligne 19 colonne 13 de la matrice initiale A, et « NotificationConditionAérodrome ⊆ Notam » formant le coefficient 1 à la ligne 13 colonne 10 de la matrice initiale A. Par application de la première opération, la matrice résultante comprend donc la valeur 1 pour le coefficient de ligne 19 et de colonne 10, retranscrivant alors l'axiome « ObstaclePrèsDeLaPiste ⊆ Notam ». Ce dernier axiome n'était initialement pas compris dans l'ontologie et a été déduit durant cette première opération.

Une deuxième opération est par exemple l'opération suivante $A + = A . {\sum }_{R} {Ψ}^{R} Π . A . {Π}^{T} . {Ψ}^{{R}^{T}}$ où Σ*_{R}* 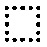 désigne la somme pour chaque relation R de la base de relations Rbox, Π*^{T}* désigne la transposée de la matrice existentielle Π, Ψ^{R} désigne la matrice de restriction pour la relation R, et (Ψ^{R})^{T} désigne la transposée de la matrice de restriction pour la relation R.

La deuxième opération permet d'appliquer la règle d'inférence *R*_{∃}, dite règle d'existence *R*_{∃}, qui exprime la transitivité de la restriction existentielle d'une donnée complexe à une autre en cas d'inclusion entre les données auquel sont appliquées ces restrictions existentielles. En particulier, cette règle *R*_{∃} permet de retranscrire que, si la base de données Tbox comprend :
- un axiome « *α* ⊆ 3 R.*β* », i.e. selon lequel une première donnée *α* est incluse dans la donnée complexe 3 R.*β* faisant intervenir une relation R et une deuxième donnée *β*, et
- un axiome *β* ⊆ *γ*, i.e. selon lequel la deuxième donnée *β* et incluse dans une troisième donnée *γ*,
alors l'axiome « *α* ⊆ 3 R.*γ* », selon lequel la première donnée *α* est incluse dans la donnée complexe 3 R.*γ* faisant intervenir la relation R et la troisième donnée *γ*, est vrai.

Une troisième opération est par exemple la suivante : $A + = A . Γ$

La troisième opération permet alors d'appliquer la règle d'inférence *R_{H}*, dite règle de hiérarchie *R_{H}*, selon laquelle si :
- la base de données Tbox comprend un axiome « *α* ⊆ 3 R.*β* », selon lequel une première donnée *α* est incluse dans la donnée complexe 3 R.*β* faisant intervenir une première relation R et une deuxième donnée *β*, et
- la base de relation comprend un axiome de hiérarchie « R ⊆ S », selon lequel la première relation R est une sous-relation d'une deuxième relation S,
alors l'axiome « *α* ⊆ 3 S.*β* », selon lequel la première donnée *α* est incluse dans la donnée complexe 3 S.*β* faisant intervenir la deuxième relation et la deuxième donnée, est vrai.

Dans l'exemple précédent, la base de données comprenait l'axiome « ObstaclePrèsDeLaPiste ⊆ 3 faitPartieDe o mèneA. AvisSpécialEspaceAérien » et la base de relations comprenait l'axiome de hiérarchie « faitPartieDe o mèneA ⊆ conduitA ». Aussi, après application de la troisième opération, la matrice résultante comprend le coefficient 1 pour la ligne 19 correspondant à la donnée ObstaclePrèsDeLaPiste et pour la colonne 14 correspondant à la donnée complexe 3 conduitA.AvisSpécialEspaceAérien, traduisant le nouvel axiome « ObstaclePrèsDeLaPiste ⊆ 3 conduitA.AvisSpécialEspaceAérien ».

Une quatrième opération est la suivante : $A + = A . K$

La quatrième opération permet d'appliquer la règle *R*_{∩̅}, dite règle de conjonction *R*_{∩̅}, traduisant que si une première données *α* est incluse dans une intersection *α* n *β* de deux autres données *β* et *γ*, alors elle est nécessairement incluse dans chacun des deux autres données *β*, *γ.* Autrement dit, si la base de données comprend l'axiome « *α* ⊆ *β* ∩ *γ* » alors les axiomes « *α* ⊆ *β* » et « *α* ⊆ *γ* » sont également vrais.

Dans l'exemple précédent, la base de données Tbox comprend l'axiome « NotificationAéroUrgente ⊆ NotificationConditionAérodrome n NotificationUrgente » qui se traduit par un coefficient 1, ligne 6 colonne 7 dans la matrice initiale A.

Aussi la quatrième opération ferait apparaître un coefficient 1 en ligne 6, colonne 9 traduisant l'axiome « NotificationAéroUrgente ⊆ NotificationUrgente » et un coefficient 1 en ligne 6, colonne 13 traduisant l'axiome « NotificationAéroUrgente ⊆ NotificationConditionAérodrome ».

Une cinquième opération matricielle est par exemple la suivante : $A + = {AK}^{{\left(1\right)}^{T}} o {AK}^{{\left(2\right)}^{T}}$ où *o* et le produit d'Hadamard connu en soit, *K*^{(1)^{T}} et *K*^{(2)^{T}} désignent respectivement les transposée des matrices de conjonction gauche *K*⁽¹⁾ et droite *K*⁽²⁾*.*

La cinquième opération permet d'appliquer la règle *R*_{∩+}, dite règle de conjonction réciproque *R*_{∩+}, qui est la réciproque de la règle de conjonction *R*_{∩̅} décrite ci-dessus. Autrement dit, la règle de conjonction réciproque *R*_{∩+} traduit que ; si une première donnée *α* est incluse dans une deuxième donnée *β*, et que cette première donnée *α* est également incluse dans une troisième donnée *γ*, alors cette première donnée *α* est incluse dans l'intersection entre la deuxième *β* et la troisième *γ* données. Autrement dit, la règle de conjonction réciproque *R*_{∩+} traduit que, si la base de données comprend les axiomes « *α* ⊆ *β* » et « *α* ⊆ *γ* », alors l'axiome « *α* ⊆ *β* n *γ* » est vrai.

Une sixième opération est par exemple la suivante : $A + = A . \left({\sum }_{R} {Ψ}^{R} . Π . A . {Π}^{T} . {Ψ}^{{R}^{T}}\right) . Γ$

La sixième opération permet d'appliquer la règle *Rₒ*, dite règle de composition *Rₒ*, selon laquelle si :
- la base de données comprend un premier axiome « *α* ⊆ 3 R1.*β* » selon lequel une première donnée *α* est incluse dans une donnée complexe 3 R1.*β* faisant intervenir une première relation R1 et une deuxième donnée *β*, et
- la base de données comprend un deuxième axiome « *α* ⊆ 3 R1.*β* » selon lequel la deuxième donnée *β* est incluse dans une donnée complexe 3 R2.*γ* faisant intervenir une deuxième relation R2 et une troisième donnée *γ*, et
- la base de relations comprend un axiome « R1 *o* R2 ⊆ R3 » selon lequel la composition des première R1 et deuxième R2 relations est hiérarchiquement incluse dans la relation R3,
alors l'axiome « *α* ⊆ 3 R3. *γ* » selon lequel la première donnée *α* est incluse dans la données complexe faisant intervenir la troisième relation R3 et la troisième donnée *γ* est vrai.

Dans l'exemple précité, la base de données Tbox comprend l'axiome « NotificationTravaux ⊆ 3 faitPartieDe.NotificationConditionAérodrome » se traduisant par un coefficient 1 en ligne 16, colonne 17, et l'axiome « NotificationConditionAérodrome ⊆ mèneA.AvisSpécialEspaceAérien » se traduisant par une coefficient 1 en ligne 13, colonne 14. La base de relations Rbox comprend l'axiome de relation selon « faitPartieDe *o* mèneA ⊆ conduitA ». Aussi, l'application de la sixième opération fait apparaître un coefficient 1 en ligne 16, colonne 15, traduisant l'axiome « NotificationTravaux ⊆ 3 conduitA.AvisSpécialEspaceAérien ».

Préférentiellement, le module d'application 50 est configuré pour appliquer chacune des opérations précitées successivement.

Aussi, lors de l'application de chaque opération matricielle, la matrice initiale A à laquelle ladite opération matricielle est appliquée est la matrice initiale résultant de l'opération matricielle précédente.

On comprend alors que selon ce mode de réalisation préférentiel, le module d'application 50 est configuré pour incrémenter des coefficients de la matrice initiale à chaque application d'une opération matricielle.

En variante, le module d'application 50 est configuré pour appliquer chaque opération précitée en parallèle puis fusionner les résultat les matrice résultants de chaque opération par une somme booléenne, afin d'obtenir la matrice enrichie A*.

Le module d'application 50 est configuré pour obtenir, à l'issu de l'application d'une ou des opérations précédemment décrites, la matrice enrichie A*. La matrice enrichie A* comprend des coefficients non-nuls aux mêmes coordonnées, en terme de lignes et de colonnes, où la matrice initiale A, générée par le module de génération 45, présentait des coefficients nuls.

Ces coefficients non-nuls forment alors des inférences de connaissances puisqu'ils forment de nouveaux axiomes qui étaient absents de l'ontologie reçue.

En effet, chaque coefficient non nul situé à une ligne *i* et une colonne *j* signifie que la donnée correspondant à la ligne *i* est incluse dans la donnée correspondant à la colonne *j*.

Dans l'exemple précédent la matrice enrichie A* résultant de l'application de chaque opération est égale à :

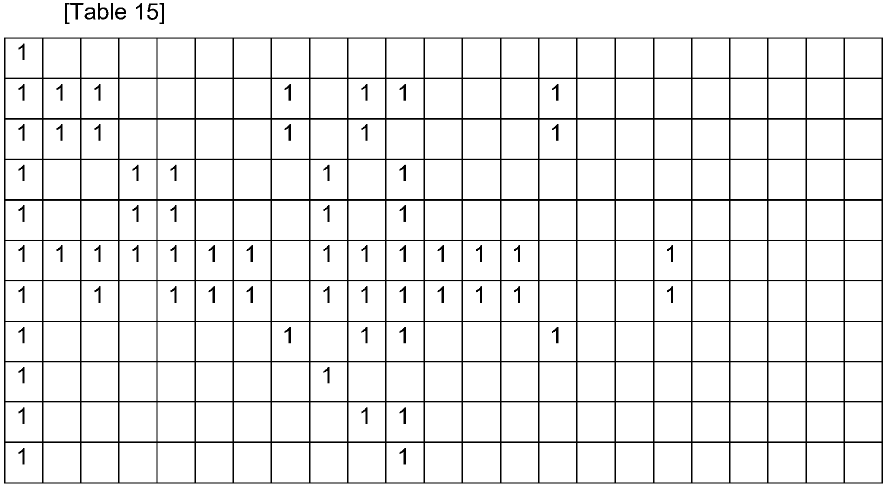

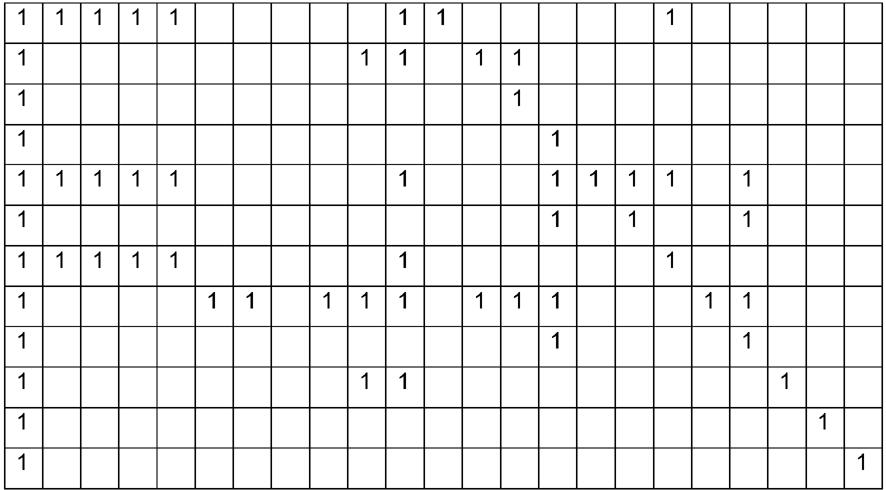

Le module de détermination 55 est configuré pour déterminer des nouveaux axiomes par comparaison de la matrice enrichie A* avec la matrice initiale A, de préférence la matrice initiale A générée par le module de génération 50.

A cet effet, le module de détermination 55 est configuré pour déterminer, pour chaque coefficient non-nul de la matrice enrichie qui était nul dans la matrice initiale A, un nouvel axiome du type « *α* ⊆ *β* », où *α* est la donnée associée à la ligne de ce coefficient et *β* est la donnée associée à la colonne de ce coefficient.

Optionnellement, le module de détermination 55 est configuré pour, si la matrice enrichie A* est distincte de la matrice initiale A, commander au module d'application de réitérer l'application de la ou des opérations en prenant la matrice enrichie A* comme nouvelle matrice initiale A.

Aussi, on comprend que selon ce complément optionnel, le module de détermination 55 est configuré pour déterminer les nouveaux axiomes seulement après que la dernière matrice enrichie A* soit parfaitement égale à la matrice enrichie A* de l'itération précédente. Un tel état est appelé saturation de la matrice enrichie A*.

Dans l'exemple précédent, la matrice enrichie A* résultant de la deuxième itération est égale à :

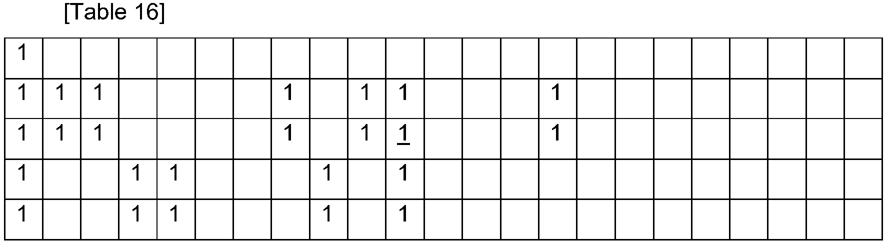

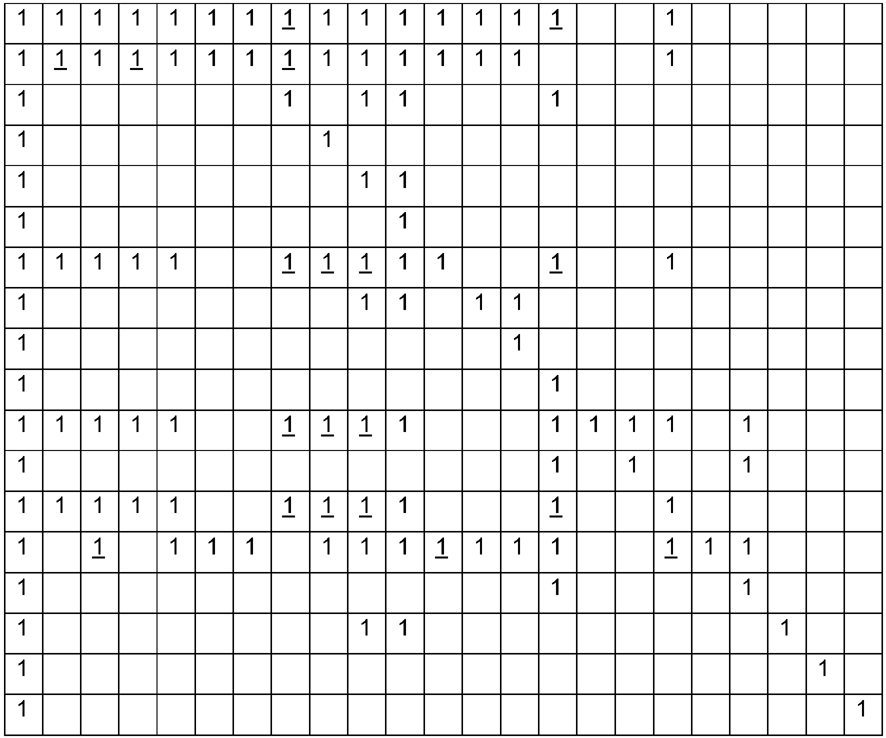

Dans cette matrice, les coefficients non-nuls de la matrice enrichie A* issue de la deuxième itération qui étaient nuls dans la matrice enrichie issue de la première itération sont soulignés

La matrice enrichie résultant de la troisième itération est égale à :

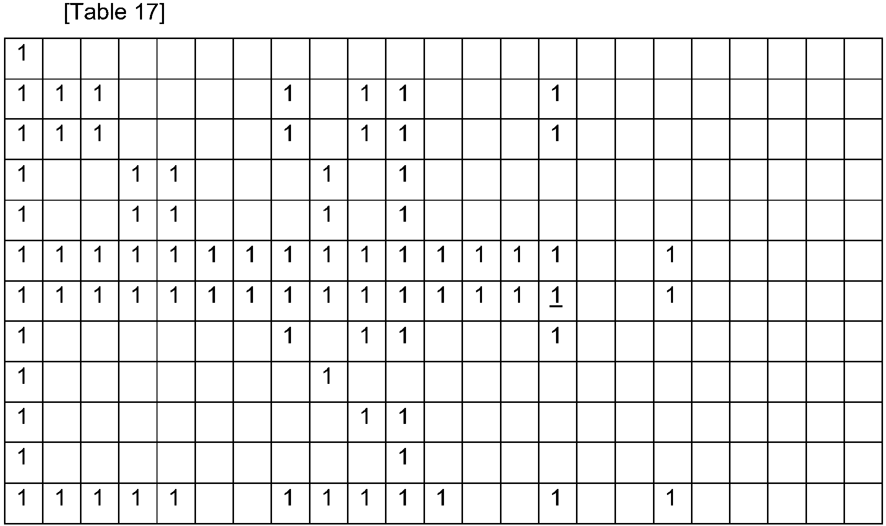

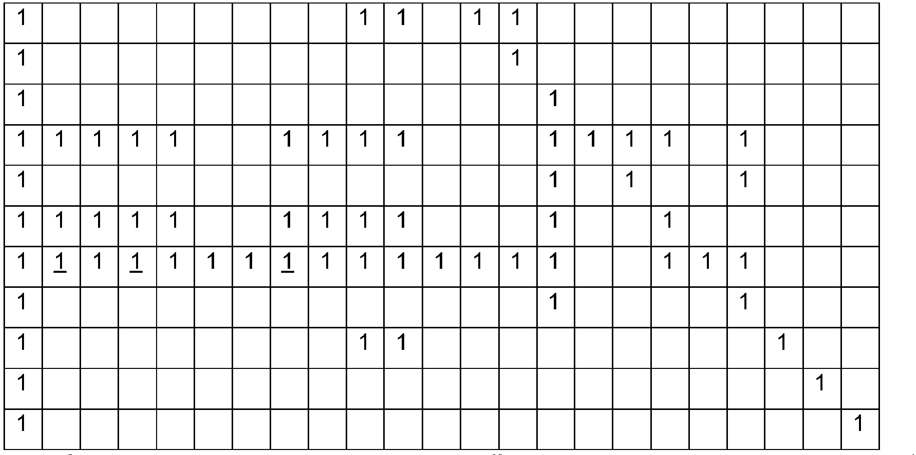

Similairement, dans cette matrice, les coefficients non-nuls de la matrice enrichie A* issue de la troisième itération qui étaient nuls dans la matrice enrichie issue de la deuxième itération sont soulignés.

La matrice enrichie résultant de la quatrième itération est égale à :

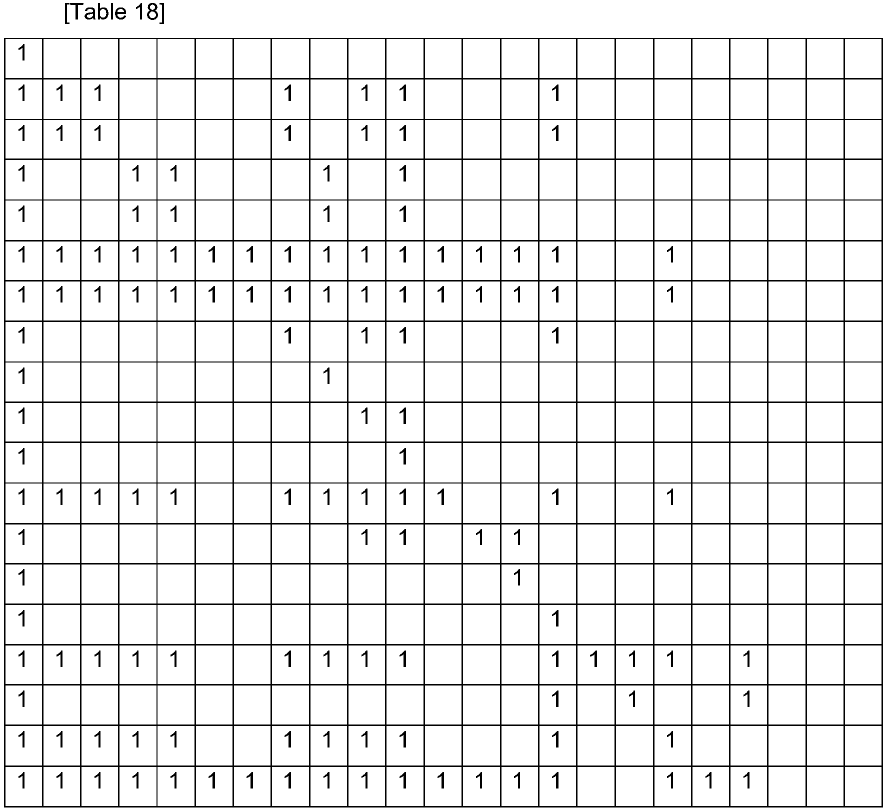

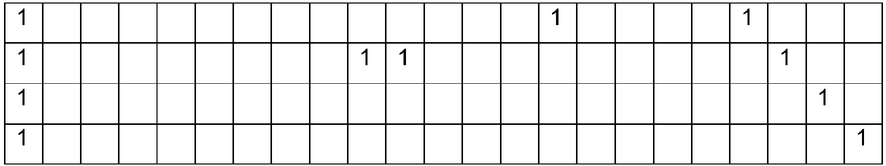

La matrice enrichie A* issue de la quatrième itération étant identique à celle issue de la troisième itération, dans cet exemple, le module de détermination 55 est configuré pour alors comparer cette dernière matrice enrichie A* à la matrice initiale A générée par le module de génération 45 et en déduire un axiome pour chaque coefficient distinct entre ces deux matrices.

Dans cet exemple, les nouveaux axiomes déterminés sont les suivants :
- ApplicationARestriTemp ⊆ Thing,
- ApplicationARestriTemp ⊆ Notam,
- ApplicationARestriTemp ⊆ 3 liéA.Thing,
- ApplicationARestriTemp ⊆ 3 conduitA.AvisSpécialAérien,
- 3 s_appliqueA.RestrictionTemporaire ⊆ Thing,
- 3 s_appliqueA.RestrictionTemporaire ⊆ NotificationModificationMajeureEspaceAérien,
- 3 s_appliqueA.RestrictionTemporaire ⊆ Notam
- 3 s_appliqueA.RestrictionTemporaire ⊆ 3 liéA.thing,
- 3 s_appliqueA.RestrictionTemporaire ⊆ 3 conduitA.AvisSpécialAérien,
- LiaisonNotam ⊆ Thing,
- LiaisonNotam ⊆ 3 liéA.Thing,
- 3 liéA.Notam ⊆ Thing
- 3 liéA.Notam ⊆ NotificationUrgente,
- 3 liéA.Notam ⊆ 3 liéA.Thing
- NotificationAéroUrgente ⊆ Thing,
- NotificationAéroUrgente ⊆ ApplicationARestriTemp,
- NotificationAéroUrgente ⊆ 3 s_appliqueA.RestrictionTemporaire,
- NotificationAéroUrgente ⊆ LiaisonNotam,
- NotificationAéroUrgente ⊆ 3 liéA.Notam,
- NotificationAéroUrgente ⊆ NotificationModificationMajeureEspaceAérien,
- NotificationAéroUrgente ⊆ NotificationUrgente,
- NotificationAéroUrgente ⊆ Notam,
- NotificationAéroUrgente ⊆ 3 liéA.Thing,
- NotificationAéroUrgente ⊆ NotificationConditionAérodrome,
- NotificationAéroUrgente ⊆ 3 mèneA.AvisSpécialAérien,
- NotificationAéroUrgente ⊆ 3 conduitA.AvisSpécialAérien
- NotificationAéroUrgente ⊆ 3 liéA.restrictionTemporaire,
- NotificationConditionAérodrome n NotificationUrgente ⊆ Thing,
- NotificationConditionAérodrome n NotificationUrgente ⊆ ApplicationARestriTemp,
- NotificationConditionAérodrome n NotificationUrgente ⊆ ∃ s_appliqueA.RestrictionTemporaire,
- NotificationConditionAérodrome n NotificationUrgente ⊆ LiaisonNotam,
- NotificationConditionAérodrome n NotificationUrgente ⊆ 3 liéA.Notam,
- NotificationConditionAérodrome n NotificationUrgente ⊆ Notification MajeureEspaceAérien,
- NotificationConditionAérodrome n NotificationUrgente ⊆ NotificationUrgente,
- NotificationConditionAérodrome n NotificationUrgente ⊆ Notam,
- NotificationConditionAérodrome n NotificationUrgente ⊆ 3 liéA.thing,
- NotificationConditionAérodrome n NotificationUrgente ⊆ NotificationZoneRestreinte,
- NotificationConditionAérodrome n NotificationUrgente ⊆ NotificationConditionAérodrome
- NotificationConditionAérodrome n NotificationUrgente ⊆ ∃ mèneA.AvisSpécialEspaceAérien,
- NotificationConditionAérodrome n NotificationUrgente ⊆ ∃ conduitA.AvisSpécialEspaceAérien,
- NotificationConditionAérodrome n NotificationUrgente ⊆ ∃ liéA.RestrictionTemporaire,
- NotificationModificationMajeureEspaceAérien ⊆ Thing
- NotificationModificationMajeureEspaceAérien ⊆ 3 liéA.Thing
- NotificationUrgente ⊆ Thing,
- Notam ⊆ Thing,
- 3 liéA.Thing ⊆ Thing,
- NotificationZoneRestreinte ⊆ Thing,
- NotificationZoneRestreinte ⊆ ApplicationARestriTemp,
- NotificationZoneRestreinte ⊆ 3 s_appliqueA.RestrictionTemporaire,
- NotificationZoneRestreinte ⊆ LiaisonNotam,
- NotificationZoneRestreinte ⊆ 3 liéA.Notam,
- NotificationZoneRestreinte ⊆ NotificationModificationMajeureEspaceAérien,
- NotificationZoneRestreinte ⊆ notificationUrgente,
- NotificationZoneRestreinte ⊆ Notam,
- NotificationZoneRestreinte ⊆ 3 liéA.Thing,
- NotificationZoneRestreinte ⊆ 3 conduitA.AvisSpécialAérien,
- NotificationConditionAérodrom ⊆ Thing,
- NotificationConditionAérodrom ⊆ 3 liéA.Thing
- 3 mèneA.AvisSpécialEspaceAérien ⊆ Thing,
- 3 conduitA.AvisSpécialEspaceAérien ⊆ Thing,
- NotificationTravaux ⊆ Thing,
- NotificationTravaux ⊆ ApplicationARestriTemp,
- NotificationTravaux ⊆ 3 s_appliqueA.RestrictionTemporaire,
- NotificationTravaux ⊆ LiaisonNotam,
- NotificationTravaux ⊆ 3 liéA.Notam,
- NotificationTravaux ⊆ NotificationModificationMajeureEspaceAérien,
- NotificationTravaux ⊆ NotificationUrgente,
- NotificationTravaux ⊆ Notam,
- NotificationTravaux ⊆ 3 liéA.Thing,
- NotificationTravaux ⊆ 3 conduitA.AvisSpécialEspaceAérien,
- NotificationTravaux ⊆ 3 faitPartieDe o mèneA.AvisSpécialEspaceAérien,
- 3 faitPartieDe.NotificationConditionAérodrome ⊆ Thing,
- 3 faitPartieDe.NotificationConditionAérodrome ⊆ 3 conduitA.AvisSpécialEspaceAérien,
- 3 faitPartieDe.NotificationConditionAérodrome ⊆ 3 faitPartieDe *o* mèneA.AvisSpécialEspaceAérien
- 3 liéA.RestrictionTemporaire ⊆ Thing,
- 3 liéA.RestrictionTemporaire ⊆ ApplicationARestriTemp,
- 3 liéA.RestrictionTemporaire ⊆ 3 s_appliqueA.RestrictionTemporaire,
- 3 liéA.RestrictionTemporaire ⊆ LiaisonNotam,
- 3 liéA.RestrictionTemporaire ⊆ 3 liéA.Notam,
- 3 liéA.RestrictionTemporaire ⊆ NotificationModificationMajeureEspaceAérien,
- 3 liéA.RestrictionTemporaire ⊆ NotificationUrgente,
- 3 liéA.RestrictionTemporaire ⊆ Notam,
- 3 liéA.RestrictionTemporaire ⊆ 3 liéA.Thing,
- 3 liéA.RestrictionTemporaire ⊆ 3 conduitA.AvisSpécialAérien,
- ObstaclePrèsDeLaPiste ⊆ Thing,
- ObstaclePrèsDeLaPiste ⊆ ApplicationARestriTemp,
- ObstaclePrèsDeLaPiste ⊆ 3 s_appliqueA.restrictionTemporaire,
- ObstaclePrèsDeLaPiste ⊆ LiaisonNotam,
- ObstaclePrèsDeLaPiste ⊆ 3 liéA.Notam,
- ObstaclePrèsDeLaPiste ⊆ NotificationAéroUrgente,
- ObstaclePrèsDeLaPiste ⊆ NotificationConditionAérodrom n NotificationUrgent,
- ObstaclePrèsDeLaPiste ⊆ NotificationModificationMajeureEspaceAérien,
- ObstaclePrèsDeLaPiste ⊆ Notam,
- ObstaclePrèsDeLaPiste ⊆ 3 liéA.Thing,
- ObstaclePrèsDeLaPiste ⊆ NotificationZoneRestreinte,
- ObstaclePrèsDeLaPiste ⊆ 3 mèneA.AvisSpécialEspaceAérien,
- ObstaclePrèsDeLaPiste ⊆ 3 conduitA.AvisSpécialEspaceAérien,
- ObstaclePrèsDeLaPiste ⊆ 3 liéA.RestrictionTemporaire,
- 3 faitPartieDe *o* mèneA.AvisSpécialEspaceAérien ⊆ Thing,
- 3 faitPartieDe *o* mèneA.AvisSpécialEspaceAérien ⊆ 3 conduitA.AvisSpécialEspaceAérien,
- RestrictionTemporaire ⊆ Thing,
- RestrictionTemporaire ⊆ 3 liéA.Thing,
- AvisSpécialEspaceAérien ⊆ Thing.

Le module d'enrichissement 60 est configuré pour enrichir l'ontologie en incluant des axiomes nouvellement déterminés dans la base de données, pour former une ontologie enrichie.

Dans le cas où chaque opération a été appliqué et que ces opérations ont été réitérées jusqu'à la saturation de la matrice enrichie A*, il peut être alors prouvé que l'enrichissement est « sound and complete ». Ceci signifie que l'intégralité des axiomes inférables à partir de l'ontologie initiale a bien été inférée pour les données déjà présente dans la base de données Tbox.

Selon le complément optionnel dans lequel le dispositif d'enrichissement 30 comprend le module de détection d'incohérence 62, le module d'application 50 est en outre configuré pour appliquer la septième opération suivante.

La septième opération est la suivante :$A + = A . Π . A . {I}_{⊥}$

La septième opération permet d'appliquer la règle *R*_{⊥}, dite règle de détection d'incohérence *R*_{⊥}, selon laquelle si une donnée *α* est incluse dans la donnée Bottom, alors il y a une incohérence dans l'ontologie. Ce type d'incohérence permet donc de traduire un problème dans lequel une mission serait à la fois considérée comme réalisable et comme impossible. Dans une telle situation, il existe alors un problème dans les données et axiomes de l'ontologie.

Le module de détection d'incohérence 62 est configuré pour, dans un tel cas, commander l'affichage d'une alerte à destination du pilote sur l'écran d'affichage 65.

L'écran d'affichage 65 de l'IHM 35 est configuré pour afficher différentes informations au pilote de l'aéronef. Par exemple, l'écran d'affichage est intégré dans le cockpit de l'aéronef.

Le module d'acquisition 70 est configuré pour acquérir une requête de la part du pilote.

La requête concerne par exemple une demande d'informations sur la situation actuelle du vol de l'aéronef, telle que la présence d'un obstacle sur la piste.

Le module d'acquisition 70 est par exemple un clavier propre à recevoir la requête sous forme de caractère textuel de manière connue en soit.

Le module traitement 75 est configuré pour traiter la requête du pilote. De préférence, le module de traitement 75 est configuré pour traduire la requête dans un langage compréhensible par le raisonneur de l'ontologie enrichie, et pour transmettre la requête traduite à ce raisonneur.

Le module traitement 75 est alors configuré pour recevoir, depuis ce raisonneur, un retour du raisonneur comprenant les informations demandées dans la requête.

Le module de traitement 75 est alors configuré pour traduire le retour du raisonneur pour former une réponse compréhensible par le pilote.

Le module d'émission 80 est configuré pour émettre, à destination du pilote, la réponse à la requête reçue.

A cet effet, le module d'émission 80 est par exemple configuré pour afficher la réponse sur l'écran d'affichage 70.

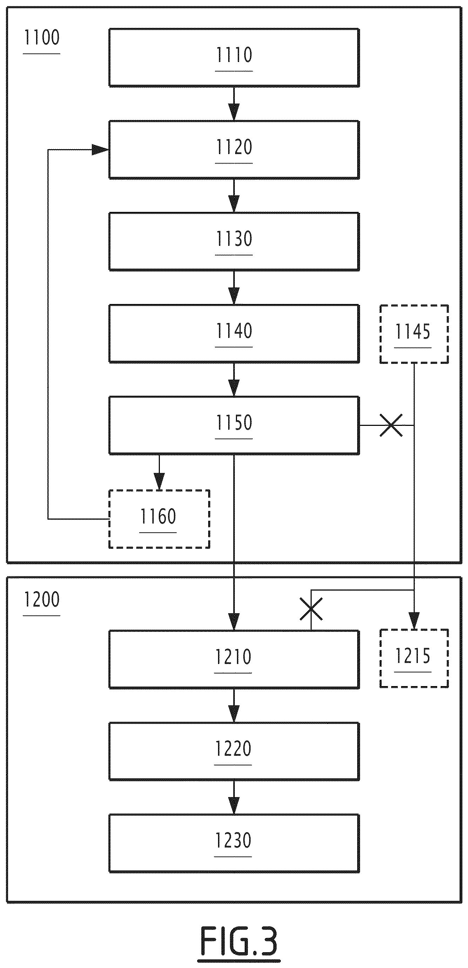

Le fonctionnement du système d'aide au pilotage 25 va maintenant être décrit en référence à la figure 3 illustrant un procédé d'aide au pilotage 1000 selon l'invention.

Initialement, l'aéronef est en vol, piloté par le pilote.

Le procédé 1000 comprend une phase d'enrichissement 1100 de l'ontologie.

La phase d'enrichissement 1100 comprend alors une étape de réception 1110 de l'ontologie comprenant la base de données Tbox et optionnellement la base de relations Rbox,

Par exemple, l'ontologie est reçue préalablement au décollage de l'aéronef.

Par suite l'aéronef décolle et est en vol.

La phase d'enrichissement 1100 comprend ensuite une étape de génération 1120.

Lors de l'étape de génération 1120, le module de génération 45 génère la matrice initiale A comprenant pour chaque donnée de base de données Tbox, une ligne ou une colonne. Pour chaque ligne et pour chaque colonne, la matrice initiale A comporte un coefficient à valeur numérique, chaque coefficient de la matrice initiale A étant non-nul si la base de données Tbox comprend un axiome selon lequel la donnée associée à la ligne de ce coefficient est incluse dans la données associée à la colonne de ce coefficient, chaque coefficient diagonal de la matrice initiale A étant en outre non-nul.

Préférentiellement la matrice initiale A est telle que décrite précédemment.

De préférence, le module de génération 45 génère en outre la matrice d'inclusion B, la ou chaque matrice de restriction Ψ*^{R} ,* la matrice existentielle Π, la matrice de conjonction K, la matrice de conjonction gauche K⁽¹⁾, la matrice de conjonction droite K⁽²⁾, la matrice d'inclusion de relations Γ et/ou la matrice d'incohérence *I*_{⊥}, comme décrit précédemment.

La phase d'enrichissement 1100 comprend en outre une étape d'application 1130.

Lors de l'étape d'application 1130, le module d'application 50 applique à la matrice initiale A, au moins une opération matricielle issue d'un ensemble de règles d'inférence *R*_{⊆}, *R*_{∃}, *R_{H}*, *R*_{∩̅}, *R*_{∩+}, *Rₒ,* pour obtenir la matrice enrichie A*. La matrice enrichie A* comprenant un plus grand nombre de coefficient non-nuls que la matrice initiale A.

Préférentiellement, lors de l'étape d'application 1130, le module d'application 50 applique chacune des premières à sixième opérations précédemment décrites.

Plus préférentiellement, lors de l'application de chacune de ces opérations à l'exception de la première, le module d'application 50 utilise la matrice obtenue à l'issu de la précédente opération en tant que matrice initiale A.

Aussi lors de l'application de chaque opération, la matrice initiale A est modifiée pour finalement obtenir une matrice enrichie A* comprenant plus de coefficients non-nuls que la matrice initiale A générée lors de l'étape de génération 1120.

En variante, les opérations sont appliquées en parallèle et l'étape d'application 1130 comprend en outre la somme booléenne des matrices résultant de chaque opération afin de former la matrice enrichie A*.

La phase d'enrichissement 1100 comprend en outre une étape de détermination 1140 d'au moins un nouvel axiome entre les données de la base de données Tbox par comparaison de la matrice enrichie A* avec la matrice initiale A.

Optionnellement, lors de l'étape de détermination 1140, si la matrice enrichie A* est distincte de la matrice initiale A, le module de détermination 55 commande au module d'application 50 de réitérer l'application de la ou des opérations en prenant la matrice enrichie A* comme nouvelle matrice initiale A.

Préférentiellement, le module de détermination 55 réitère ces applications jusqu'à ce que la matrice enrichie A* issuz d'une itération soit égale à la matrice enrichie issue de l'itération précédente.

Puis, lors de l'étape de détermination 1140 le module de détermination 55 compare la matrice enrichie A*, optionnellement la dernière matrice enrichie A*, avec la matrice initiale A générée lors de l'étape de génération 1130. Pour chaque coefficient distinct entre la matrice enrichie A* et la matrice initiale A, le module de détermination 55 détermine un nouvel axiome.

En particulier, pour chaque coefficient à valeur non-nulle dans la matrice enrichie A* et à valeur nulle dans la matrice initiale A, le module de détermination 55 détermine un nouvel axiome. Cet axiome est du type « *α* ⊆ *β* » où *α* est la donnée associée à la ligne de ce coefficient, et *β* est la donnée associée à la colonne dudit coefficient.

La phase d'enrichissement 1100 comprend ensuite une étape d'enrichissement 1150.

Lors de l'étape d'enrichissement 1150, le module d'enrichissement 60 enrichie l'ontologie avec les axiomes déterminés lors de l'étape de détermination 1140. A cet effet, le module d'enrichissement 60 inclut dans l'ontologie les axiomes déterminés.

De préférence, le module d'enrichissement 60 inclut ces axiomes dans la base de données Tbox.

Selon un complément facultatif, la phase d'enrichissement 1100 comprend optionnellement une étape de réception 1160 de mise(s) à jours de l'ontologie. A titre d'exemple, cette mise à jours de l'ontologie provient de la réception, par le module de réception 40 et depuis une tour de contrôle qui envoie un message du type « Messages aux Navigants », aussi appelé message NOTAM (de l'anglais NOtice To AirMen). Ce NOTAM comprend alors une mise à jours de certaines données de la base de données de l'ontologie, ou l'ajouts de nouvelles données ou axiomes dans la base de données.

Suite à cette étape de réception 1160, la phase d'enrichissement 1100 réitère alors les étapes de génération 1120, d'application 1130, de détermination 1140 et d'enrichissement 1150.

Suite à la phase d'enrichissement 1100, l'ontologie est enrichie et est donc plus à même de fournir de l'information pertinente au pilote de l'aéronef.

Le procédé 1000 comprend ensuite la phase de requête 1200.

Lors du vol de l'aéronef, à un instant donné, le pilote de l'aéronef souhaite obtenir de l'information contenue dans l'ontologie. Le pilote émet donc une requête à destination du système d'aide au pilotage 20. Par exemple, le pilote écrit sa requête via le clavier associé au système d'aide au pilotage 20.

La phase de requête 1200 comprend une étape d'acquisition 1210. Lors de l'étape d'acquisition 1210, le module d'acquisition 70 acquiert la requête issue du pilote.

La phase de requête 1200 comprend ensuite une étape d'interrogation 1220. Lors de l'étape d'interrogation 1220, le module de traitement 75 interroge l'ontologie enrichie.

A cet effet, le module de traitement 75 traduit préférentiellement la requête dans un langage compréhensible par le raisonneur, dite requête traduite. Le module de traitement 75 transmet alors ensuite la requête traduite au raisonneur de l'ontologie et obtient un retour, depuis le raisonneur. Le retour comprend les informations demandées par le pilote.

Le module de traitement 75 traduit alors préférentiellement le retour du raisonneur en une réponse compréhensible par le pilote.

La phase de requête 1200 comprend ensuite une étape d'émission 1230. Lors de l'étape d'émission 1230, le module d'émission 77 émet la réponse à destination du pilote de l'aéronef.

A cet effet, le module d'émission 77 commande préférentiellement l'affichage de la réponse sur l'écran d'affichage de l'IHM.

Selon un complément optionnel, le procédé comprend en outre, lors de sa phase d'enrichissement 1100 et en parallèle de l'étape de détermination 1140, une étape de détection d'incohérence 1145.

Selon ce complément facultatif, lors de l'étape d'application 1130, le module d'application 50 applique également la septième opération.

Lors de l'étape de détection d'incohérence 1145, le module de détection d'incohérence 62 détecte une incohérence, aussi appelé inconsistance, dans l'ontologie si la matrice enrichie A* comprend un coefficient non-nul dans la colonne associée à l'ensemble vide « bottom », pour une ligne distincte de la ligne associée à l'ensemble vide « bottom » lui-même. En effet, un tel coefficient non-nul impliquerait que l'axiome selon lequel une donnée de l'ontologie distincte du « thing » ou du « botom » serait incluse dans la donnée « bottom », i.e. dans l'ensemble vide.

Dans un tel cas, le procédé comprend l'inhibition de l'étape d'enrichissement 1150, et de l'étape d'acquisition 1210 de la phase de requête 1200.

La phase de requête 1200 comprend alors une étape d'alerte 1215. Lors de l'étape d'alerte 1215, le module d'émission 77 émet une alerte au pilote de l'aéronef selon laquelle l'ontologie présente une incohérence. A cet effet, le module d'émission 77 affiche préférentiellement sur l'écran d'affichage un tel message d'alerte.

Grâce à ce message d'alerte, le pilote est au courant que l'ontologie est inconsistante. A titre d'exemple, cela permet d'indiquer au pilote qu'il ne doit pas s'y référer car elle pourrait fournir des informations incohérentes ou alors lui demander d'engager une action tel que de contacter la tour de contrôle.

On comprend en outre qu'il n'est pas nécessaire d'appliquer chaque opération afin d'enrichir l'ontologie. En effet l'application de chaque opération indépendamment permet déjà de déduire de nouveaux axiomes et donc d'enrichir l'ontologie.

## Revendications

1. Procédé (1000) d'aide au pilotage pour un pilote (20) dans un aéronef (10), le procédé (1000) étant mis en œuvre par un système électronique d'aide au pilotage (25) embarqué dans l'aéronef (10), et comprenant une phase d'enrichissement (1100) comprenant les étapes suivantes :
- réception (1110) d'une ontologie comprenant une base de données (TBox),
la base de données stockant une pluralité de données et au moins une pluralité d'axiomes, chaque axiome indiquant qu'une donnée respective est incluse dans une autre données respective de la base de données,
- génération (1120) d'une matrice (A) représentative de l'ontologie, dite matrice initiale (A), la matrice initiale (A) comprenant pour chaque donnée de la base de données, une ligne ou une colonne,
pour chaque ligne et pour chaque colonne, la matrice initiale (A) comportant un coefficient à valeur numérique, chaque coefficient de la matrice initiale (A) étant non-nul si la base de données (Tbox) comprend un axiome selon lequel la donnée associée à la ligne de ce coefficient est incluse dans la donnée associée à la colonne de ce coefficient, chaque coefficient diagonal de la matrice initiale (A) étant en outre non-nul,
- application (1130), à la matrice initiale (A), d'au moins une opération matricielle issue d'un ensemble de règles d'inférence (*R*_{⊆}*, R*_{∃}, *R_{H}*, *R*_{∩̅}, *R*_{∩+}, *Rₒ, R*_{⊥})*,* pour obtenir une matrice (A*), dite matrice enrichie (A*), la matrice enrichie (A*) comprenant un plus grand nombre de coefficient non-nuls que la matrice initiale (A),
- détermination (1140) d'au moins un nouvel axiome entre les données de la base de données par comparaison de la matrice enrichie (A*) avec la matrice initiale (A),
- enrichissement (1150) de l'ontologie par inclusion du ou des axiomes nouvellement déterminés dans la base de données, pour former une ontologie enrichie,
le procédé (1000) comprenant en outre une phase de requête (1200), comprenant les étapes suivantes :
- acquisition (1210) d'une requête de la part du pilote de l'aéronef,
- interrogation (1220) de l'ontologie enrichie,
- émission (1230), à destination du pilote de l'aéronef, d'une réponse à la requête acquise.

2. Procédé (1000) selon la revendication 1, dans lequel l'étape de génération (1120) comprend en outre, la génération d'une matrice (B), dite matrice d'inclusion (B), dont chaque coefficient (B_{i,j}) est non-nul si et seulement si la base de donnée comprend un axiome (*α* ⊆ *β*) selon lequel la donnée (*α*) associée la ligne i de ce coefficient est incluse dans la donnée (*β*) associée à la colonne j de ce coefficient (B_{i,j}),
lors de l'étape d'application (1230), l'au moins une opération matricielle comprend l'opération suivante : $A + = A . B$
où :
*A* est la matrice initiale (A),
*B* est la matrice d'inclusion (B),
. est le produit matriciel, et
+= est l'affectation après addition de la matrice initiale (A) avec le résultat du produit matricielle *A. B,* l'addition étant de préférence une somme booléenne.

3. Procédé selon la revendication 1 ou 2, dans lequel l'ontologie comprend en outre une base de relations (Rbox) stockant au moins une relation (R) destinée à lier deux données entre elles,
l'étape de génération (1120) comprenant en outre la génération d'une matrice (Π) dite matrice existentielle,
chaque coefficient (Π_{i,j}) de ligne i et de colonne j, de la matrice existentielle (Π) étant non-nul si et seulement si :
- la base de relations (Rbox) comprend au moins une relation (R),
- la base de données (Tbox) comprend une donnée respective (∃*R*. *β*) associée à la ligne i, dite donnée complexe, correspondant à l'ensemble formé par des données qui sont au moins en relation avec la donnée (*β*) associée à la colonne j,
l'étape de génération (1120) comprenant en outre la génération, pour chaque relation (R) de la base de relation (Rbox), d'une matrice (Ψ*^{R}*) respective, dite matrice de restriction (Ψ*^{R}*) pour ladite relation (R),
pour chaque relation (R), chaque coefficient (Ψ^{R}_{i,j}) de ligne i et de colonne j, de la matrice de restriction (Ψ^{R}) étant non-nul si et seulement si :
∘ la base de relations (Rbox) comprend la relation (R),
∘ la base de données (Tbox) comprend une donnée respective (∃R. *β*), dite donnée complexe, correspondant à l'ensemble formé par des données qui sont au moins en relation avec la donnée (*β*) associée à la ligne i et la colonne j, selon ladite relation,
lors de l'étape d'application (1230), l'au moins une opération matricielle comprend l'opération suivante : $A + = A . \left({\sum }_{R} {Ψ}^{R} . Π . A . {Π}^{T} . {Ψ}^{{R}^{T}}\right)$
où :
*A* est la matrice initiale (A),
Σ*_{R}* 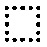 est la somme sur chaque relation (R) de la base de relations (Rbox),
ψ*^{R}* est la matrice restriction (Ψ*^{R}*) associée à la relation R,
Π est la matrice existentielle (Π),
. est le produit matriciel,
Π*^{T}* est la transposée de la matrice existentielle,
Ψ*^{R^{T}}* est la transposée de la matrice de restriction (Ψ*^{R}*) associée à la relation R, et
+= est l'affectation après addition de la matrice initiale (A) avec le résultat du produit matricielle *A.* Π. *A.* Π*^{T}*, l'addition étant de préférence une somme booléenne.

4. Procédé selon l'une quelconque des revendications 1 à 3, dans lequel l'ontologie comprend en outre une base de relations (Rbox) propre à stocker des relations respectivement destinées à liées deux données de la base de données (Tbox),
l'étape de génération (1120) comprend en outre, la génération d'une matrice (Γ), dite matrice d'inclusion de relations (Γ),
chaque coefficient (Γ_{i,j}) de ligne i et de colonne j de la matrice d'inclusion de relation (Γ) est non-nulle si et seulement si :
- la base de relations (Rbox) comprend une première relation (R) et une deuxième relation (S) distincte de la première relation (R),
- la base de relations (Rbox) comprend en outre un axiome (R ⊆ S), dit de hiérarchie, selon lequel la première relation (R) est hiérarchiquement incluse dans la deuxième relation (S),
- la base de données (Tbox) comprend au moins une donnée (∃*R. α*)*,* dite première donnée complexe, correspondant à l'ensemble formé par des données qui sont au moins en relation avec une donnée spécifique (*α*) de la base de données (Tbox), selon la première relation (R),
la première donnée complexe (3R. *α*) étant la donnée associée à la ligne i dudit coefficient (Γ_{i,j}), et
- la base de données (Tbox) comprend une donnée respective (∃*S*. *α*)*,* dite deuxième donnée complexe, correspondant à l'ensemble formé par des données qui sont au moins en relation avec la même donnée spécifique (*α*), selon la deuxième relation (S),
la deuxième donnée complexe (∃*S*. *α*) étant la donnée associée à la colonne j dudit coefficient (Γ_{i,j}),
lors de l'étape d'application (1230), l'au moins une opération matricielle comprend l'opération suivante : $A + = A . Γ$
où :
*A* est la matrice initiale (A),
Γ est la matrice d'inclusion de relation (Γ),
. est le produit matriciel, et
+= est l'affectation après addition de la matrice initiale (A) avec le résultat du produit matricielle *A.* Γ, l'addition étant de préférence une somme booléenne.

5. Procédé selon l'une quelconque des revendications 1 à 4, dans lequel l'étape de génération (1120) comprend en outre, la génération d'une matrice (K), dite matrice de conjonction (K),
chaque coefficient (K_{i,j}) de la matrice de conjonction (K), de ligne i et de colonne j, est non-nul si et seulement si :
- la base de données (Tbox) comprend au moins une donnée (*α* n *β*), dite donnée complexe, correspondant à l'intersection entre une première (*α*) et une deuxième (*β*) données respectives de la base de données (Tbox),
ladite donnée complexe (*α* n *β*) étant associée à la ligne i, et
- l'une parmi la première (*α*) et la deuxième (*β*) données est associée à la colonne j,
lors de l'étape d'application (1230), l'au moins une opération matricielle comprend l'opération suivante : $A + = A . K$
où :
*A* est la matrice initiale (A),
*K* est la matrice de conjonction (K),
. est le produit matriciel, et
+= est l'affectation après addition de la matrice initiale (A) avec le résultat du produit matricielle *A. K,* l'addition étant de préférence une somme booléenne.

6. Procédé selon l'une quelconque des revendications 1 à 5, dans lequel l'étape de génération (1120) comprend en outre, la génération d'une matrice (K⁽¹⁾), dite matrice de conjonction gauche (K⁽¹⁾),
chaque coefficient (K⁽¹⁾_{i,j}), de ligne i et de colonne j, de la matrice de conjonction gauche (K⁽¹⁾) étant non-nul si et seulement si :
- la base de données (Tbox) comprend au moins une donnée (*α* n *β*), dite donnée complexe (*α* n *β*), correspondant à l'intersection entre une première (*α*) et une deuxième (*β*) données respectives de la base de données,
ladite donnée complexe (*α* n *β*) étant associée à la ligne i, et
- la première donnée (*α*) est associée à la colonne j,
l'étape de génération (1120) comprenant en outre la génération d'une matrice (K⁽²⁾), dite matrice de de conjonction droite (K⁽²⁾),
chaque coefficient (K⁽²⁾_{i,j}) de ligne i et de colonne j de la matrice de conjonction droite (K⁽²⁾) étant non-nul si et seulement si :
- la base de données (Tbox) comprend au moins une donnée (*α* n *β*), dite donnée complexe (*α* n *β*), correspondant à l'intersection entre une première (*α*) et une deuxième (*β*) données respectives de la base de données,
ladite donnée complexe (*α* n *β*) étant associée à la ligne i, et
- la deuxième donnée (*β*) est associée à la colonne j,
lors de l'étape d'application (1230), l'au moins une opération matricielle comprend l'opération suivante : $A + = A . {K}^{{\left(1\right)}^{T}} oA . {K}^{{\left(2\right)}^{T}}$
où :
*A* est la matrice initiale (A),
*K*^{(1)^{T}} est la transposée de la matrice de conjonction gauche (K⁽¹⁾),
*K*^{(2)^{T}} est la transposée de la matrice de conjonction droite (K⁽²⁾),
. est le produit matriciel,
*o* est le produit d'Hadamard, et
+= est l'affectation après addition de la matrice initiale (A) avec le résultat du produit matricielle *A. K*^{(1)^{T}} *oA. K*^{(2)^{T}}*,* l'addition étant de préférence une somme booléenne.

7. Procédé selon l'une quelconque des revendications 1 à 6, dans lequel l'ontologie comprend en outre une base de relations (Rbox) propre à stocker des relations (R,S) respectivement destinées à lier deux données (*α,β*) de la base de données (Tbox), l'étape de génération (1120) comprenant en outre, la génération d'une matrice (Γ), dite matrice d'inclusion de relation (Γ),
chaque coefficient (Γ_{i,j}) de ligne i et de colonne j, de la matrice d'inclusion de relation (Γ) étant non-nulle si et seulement si :
- la base de relations (Rbox) comprend une première relation (R) et une deuxième relation (S),
- la base de relations (Rbox) comprend en outre un axiome de hiérarchie (R ⊆ S) selon lequel la première relation (R) est hiérarchiquement incluse dans la deuxième relation (S),
- la base de données (Tbox) comprend une donnée respective (∃*R*. *α*), dite première donnée complexe, correspondant à l'ensemble formé par des données qui sont au moins en relation avec une donnée spécifique (*α*) de la base de données (Tbox), selon la première relation (R),
la première donnée complexe (∃*R*. *α*) étant la donnée associée à la ligne i, et
- la base de données (Tbox) comprend une donnée respective (∃*S*. *α*), dite deuxième donnée complexe, correspondant à l'ensemble formé par des données qui sont au moins en relation avec la même donnée spécifique (*α*) de la base de données (Tbox), selon la deuxième relation (S),
la deuxième donnée complexe (∃*S*. *α*) étant la donnée associée à la colonne j,
l'étape de génération (1120) comprenant en outre la génération d'une matrice (Π) dite matrice existentielle,
chaque coefficient (Π_{i,j}) de ligne i et de colonne j, de la matrice existentielle (Π) étant non-nul si et seulement si :
- la base de relations (Rbox) comprend au moins une relation (R),
- la base de données (Tbox) comprend une donnée respective (∃*R*.*β*) associée à la ligne i, dite donnée complexe, correspondant à l'ensemble formé par des données qui sont au moins en relation avec la données (*β*) associée à la colonne j,
l'étape de génération (1120) comprenant en outre la génération, pour chaque relation (R) de la base de relation (Rbox), d'une matrice (Ψ*^{R}*) respective, dite matrice de restriction (Ψ*^{R}*) pour ladite relation (R),
pour chaque relation (R), chaque coefficient (Ψ^{R}_{i,j}) de ligne i et de colonne j, de la matrice de restriction (Ψ^{R}) étant non-nul si et seulement si :
∘ la base de relations (Rbox) comprend la relation (R),
∘ la base de données (Tbox) comprend une donnée respective (∃*R. β*), dite donnée complexe, correspondant à l'ensemble formé par des données qui sont au moins en relation avec la donnée (*β*) associée à la ligne i et la colonne j, selon ladite relation,
lors de l'étape d'application (1230), l'au moins une opération matricielle comprend l'opération suivante : $A + = A . \left({\sum }_{R} {Ψ}^{R} . Π . A . Π . {Ψ}^{{R}^{T}}\right) . Γ$
où :
*A* est la matrice initiale (A),
Σ*_{R}* 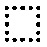 est la somme sur chaque relation (R) de la base de relations (Rbox),
Ψ*^{R}* est la matrice de restriction (Ψ*^{R}*) associée à la relation R,
Π est la matrice existentielle (Π),
Π*^{T}* est la transposée de la matrice existentielle (Π),
Ψ*^{R^{T}}* est la transposée de la matrice de restriction (Ψ*^{R}*) associée à la relation R,
Γ est la matrice d'inclusion de relations (Γ),
. est le produit matriciel, et
+= est l'affectation après addition de la matrice initiale (A) avec le résultat du produit matricielle *A.K*, l'addition étant de préférence une somme booléenne.

8. Procédé selon l'une quelconque des revendications précédentes, dans lequel la base de données (Tbox) comprend une donnée (Bottom) correspondant à l'ensemble vide,
l'étape de génération (1120) comprend en outre, la génération d'une matrice (*I*_{⊥}), dite matrice de détection d'incohérence (*I*_{⊥}), dont seul le coefficient diagonal associée à l'ensemble vide (Bottom) est non-nul,
l'étape de génération (1120) comprenant en outre la génération d'une matrice (Π), dite matrice existentielle,
chaque coefficient (Π_{i,j}) de ligne i et de colonne j, de la matrice existentielle (Π) étant non-nul si et seulement si :
- la base de relations (Rbox) comprend au moins une relation (R),
- la base de données (Tbox) comprend une donnée respective (∃*R. β*) associée à la ligne i, dite donnée complexe, correspondant à l'ensemble formé par des données qui sont au moins en relation avec la donnée (*β*) associée à la colonne j,
lors de l'étape d'application (1230), l'au moins une opération matricielle comprend l'opération suivante : $A + = A . Π . A . {I}_{⊥}$
où :
*A* est la matrice initiale (A),
Π est la matrice existentielle (Π),
*I*_{⊥} est la matrice de détection d'incohérence (*I*_{⊥}),
. est le produit matriciel, et
+= est l'affectation après addition de la matrice initiale (A) avec le résultat du produit matricielle *A. K*, l'addition étant de préférence une somme booléenne,
la phase d'enrichissement (1100) comprenant en outre une étape de détection d'incohérence (1145) dans l'ontologie si la matrice enrichie (A*) comprend un coefficient non-nul sur la colonne associée associé à l'ensemble vide, et absente de la matrice initiale (A),
le procédé (1000) comprenant alors l'inhibition de l'étape d'enrichissement (1150), et de l'étape d'acquisition (1210) de la phase de requête (1200),
la phase de requête (1200) comprenant alors une étape d'alerte (1215) à destination du pilote, d'une incohérence dans l'ontologie.

9. Procédé selon l'une quelconque des revendications précédentes, dans lequel lors de l'étape de détermination (1140), un nouvel axiome est déterminé pour chaque coefficient qui est non-nul dans la matrice enrichie (A*) et nul dans la matrice initiale (A).

10. Procédé selon l'une quelconque des revendications précédentes, dans lequel lors de l'étape d'application, au moins deux opérations matricielles sont appliquées, lors de l'application de chaque opération matricielle excepté la première opération matricielle, la matrice initiale (A) à laquelle est appliquée ladite opération matricielle étant la matrice résultant de l'opération matricielle précédente.

11. Procédé selon l'une quelconque des revendications précédentes, dans lequel les matrices sont des matrices creuses.

12. Système électronique d'aide au pilotage (25) pour un pilote (20) dans un aéronef (10), le système électronique d'aide au pilotage (25) étant embarqué dans l'aéronef (10), et comprenant un dispositif d'enrichissement (30) comprenant :
- un module de réception (40) configuré pour recevoir une ontologie comprenant une base de données (TBox),
la base de données stockant une pluralité de données et au moins une pluralité d'axiomes, chaque axiome indiquant qu'une donnée respective est incluse dans une autre données respective de la base de données,
- un module de génération (45) configuré pour générer une matrice (A) représentative de l'ontologie, dite matrice initiale (A), la matrice initiale (A) comprenant pour chaque donnée de la base de données, une ligne ou une colonne,
pour chaque ligne et pour chaque colonne, la matrice initiale (A) comportant un coefficient à valeur numérique, chaque coefficient de la matrice initiale (A) étant non-nul si la base de données (Tbox) comprend un axiome selon lequel la donnée associée à la ligne de ce coefficient est incluse dans la donnée associée à la colonne de ce coefficient, chaque coefficient diagonal de la matrice initiale (A) étant en outre non-nul,
- un module d'application (50) configuré pour appliquer, à la matrice initiale (A), d'au moins une opération matricielle issue d'un ensemble de règles d'inférence (*R*_{⊆}, *R*_{∃}, *R_{H}*, *R*_{∩̅}, *R*_{∩+}, *Rₒ*, *R*_{⊥}), pour obtenir une matrice (A*), dite matrice enrichie (A*), la matrice enrichie (A*) comprenant un plus grand nombre de coefficient non-nuls que la matrice initiale (A),
- un module de détermination (55) configuré pour déterminer au moins un nouvel axiome entre les données de la base de données par comparaison de la matrice enrichie (A*) avec la matrice initiale (A),
- un module d'enrichissement (60) configuré pour enrichir l'ontologie par inclusion du ou des axiomes nouvellement déterminés dans la base de données, pour former une ontologie enrichie,
le système électronique d'aide au pilotage (25) comprenant en outre une interface homme-machine (35), comprenant :
- un module d'acquisition (70) configuré pour acquérir une requête de la part du pilote de l'aéronef,
- un module de traitement (75) configuré pour traiter la requête en interrogeant de l'ontologie enrichie,
- un module d'émission (80) configuré pour émettre, à destination du pilote de l'aéronef, d'une réponse à la requête acquise.

13. Système selon la revendication 12, dans lequel le dispositif électronique d'enrichissement (30) comprend au moins l'un parmi : un circuit prédiffusé programmable, un processeur graphique, un processeur tensoriel, ou un processeur.
